# EUROPÄISCHE PATENTANMELDUNG

(11) **EP 4 089 999 A1**
(43) Veröffentlichungstag der Anmeldung: **16.11.2022**
(21) Anmeldenummer: 22172548.4
(22) Anmeldetag: 10.05.2022
(51) Int. Cl.: H04N 5/225, G03B 15/05, H04N 5/235, H05B 39/04, H05B 47/10

(54) **VORRICHTUNG UND VERFAHREN ZUR HOMOGENEN AUSLEUCHTUNG VON BILDERN**

(30) Priorität: 11.05.2021 DE 102021204791
(71) Anmelder: Fraunhofer-Gesellschaft zur Förderung der angewandten Forschung e.V., 80686 München (DE)
(72) Erfinder: Scholz, Oliver, 91058 Erlangen (DE)
(74) Vertreter: Zinkler, Franz

(57) **Zusammenfassung**

Die vorliegende Erfindung bezieht sich auf eine Aufnahmevorrichtung (100) und ein Verfahren (600) zur homogenen Ausleuchtung von Bildern umfassend einem Bildsensor (120) zum Aufnehmen eines Beleuchtungsbereichs (140) in einer Belichtungszeit, mehrere einzeln steuerbare Lichtquellen (150-1,150-2,150-3,150-4; 150-5; 150-6) zum Beleuchten des Beleuchtungsbereichs (140), wobei die einzeln steuerbaren Lichtquellen (150-1,150-2,150-3,150-4;150-5;150-6) an unterschiedlichen Orten bezüglich des Beleuchtungsbereichs (140) angeordnet sind, einen Erfasser (130) zum Erfassen einer ersten Beleuchtungssituation (101) des Beleuchtungsbereichs (140), und eine Steuerung (110) zum Ansteuern der einzeln steuerbaren Lichtquellen (150-1,150-2,150-3,150-4;150-5;150-6) ansprechend auf die erste Beleuchtungssituation (101), so dass die einzeln steuerbaren Lichtquellen (150-1,150-2,150-3,150-4;150-5;150-6) eine unterschiedliche Lichtmenge abgeben, um eine zweite Beleuchtungssituation (102) in dem Beleuchtungsbereich (140) zu erzeugen, die gleichmäßiger ist als die erste Beleuchtungssituation (101).

## Beschreibung

Ausführungsbeispiele der vorliegenden Erfindung beziehen sich auf eine Vorrichtung und ein Verfahren zur homogenen Ausleuchtung von Bildern.

Konventionelle Aufnahmevorrichtungen umfassen üblicherweise eine oder mehrere Beleuchtungen, beispielsweise Blitzlampen, Leuchtröhren, Blitzröhren oder Leuchtdioden, die ein Bild, eine Szene oder einen Beleuchtungsbereich ausleuchten, indem alle Leuchtquellen gleichzeitig eingeschaltet und ausgeschaltet werden. Bei Aufnahmen in Dunkelheit, beispielsweise auf einem Feld oder einer Wiese bei Nacht, können herkömmliche Bildaufnahmegeräte die erforderliche Helligkeit für eine gleichmäßige Helligkeit des Beleuchtungsbereichs aufgrund des erhöhten Energiehungers der Lichtquellen bei Nacht nicht ausreichend bereitstellen, da eine Helligkeit vergleichbar mit der Sonne erreicht werden müsste. Der Einschaltstrom kann für die benötigten Energiemengen bei Nacht mehrere 100 Ampere betragen, wobei ein erheblicher Spannungsabfall durch den Leitungswiderstand zu den Lichtquellen eintreten kann, was somit zu einem enormen Energieverlust führen kann.

Bei Aufnahmen am Tag bei bereits vorhandenem Licht, wie beispielsweise dem Sonnenlicht, können herkömmliche Bildaufnahmegeräte das Bild überbelichten, da die Leuchtquellen unabhängig von der Belichtungssituation in ihrer meist maximalen Lichtstärke leuchten. Dadurch entsteht ein unnötiger Energieverlust in Wärme, den es einzusparen gilt. Ebenso können bei Tagaufnahmen Schatten, beispielsweise durch Objekte im Beleuchtungsbereich, auftreten und somit dunkle Bereiche im Bild entstehen lassen, in denen Bildinformationen verborgen bleiben, da Bildbereiche bzw. Bildabschnitte unzureichend ausgeleuchtet sind. Herkömmliches Blitzen erfüllt jedoch nicht die Anforderung, eine Szene gleichmäßig auszuleuchten, da ungeachtet des Sonnenlichts die Helligkeit des Beleuchtungsbereichs unberücksichtigt bleibt.

Bei herkömmlichen Aufnahmevorrichtungen muss eine Bildverarbeitung beispielsweise mittels Methoden einer künstlichen Intelligenz neben der eigentlichen Klassifikationsaufgabe auch sämtliche Beleuchtungsvariationen mitlernen, beispielsweise als Lernstichproben.

Hierbei kann die Anzahl der notwendigen Lernstichproben mit unterschiedlich ausgeleuchteten Stellen des Bildes exponentiell ansteigen, während trotzdem wenig zufriedenstellenden Ergebnisse erreicht werden.

Wünschenswert wäre demnach ein Konzept zum Bereitstellen homogen ausgeleuchteter Bilder, die die oben genannten Nachteile nicht aufweisen.

In Anbetracht der obigen Ausführungen die Aufgabe der vorliegenden Erfindung darin, ein verbessertes Aufnahmekonzept zu schaffen.

Diese Aufgabe wird durch eine Aufnahmevorrichtung nach Anspruch 1, ein Verfahren zum Bereitstellen einer Aufnahmevorrichtung nach Anspruch 19 oder ein Computerprogramm nach Anspruch 20 gelöst.

Eine Erkenntnis der vorliegenden Erfindung besteht darin, dass ein Beleuchtungsbereich bedarfsgerecht mittels mehreren einzeln steuerbaren Lichtquellen ansprechend auf eine Beleuchtungssituation in einer Belichtungszeit beleuchtet werden kann, indem die Lichtquellen einzeln angesteuert werden, um eine gleichmäßige Beleuchtungssituation zu schaffen. Anders gesagt, können dunkle Bildbereiche aufgehellt werden, ohne helle Bildbereiche zu überstrahlen.

Ausführungsbeispiele gemäß der Erfindung beziehen sich auf eine Vorrichtung und ein Verfahren mit einer künstlichen Intelligenz, beispielsweise auf eine Aufnahmevorrichtung, die mehrere einzeln steuerbare Lichtquellen ansteuern kann, so dass die abgebende Lichtmenge eine zweite Beleuchtungssituation in einem Beleuchtungsbereich gleichmäßiger ausleuchtet als in einer ersten Beleuchtungssituation.

Ausführungsbeispiele gemäß der vorliegenden Erfindung schaffen eine Aufnahmevorrichtung zur homogenen Ausleuchtung von Bildern. Die Aufnahmevorrichtung umfasst einen Bildsensor zum Aufnehmen eines Beleuchtungsbereichs in einer Belichtungszeit, mehrere einzeln steuerbare Lichtquellen zum Beleuchten des Beleuchtungsbereichs, wobei die einzeln steuerbaren Lichtquellen an unterschiedlichen Orten bezüglich des Beleuchtungsbereichs angeordnet sind, einen Erfasser zum Erfassen einer ersten Beleuchtungssituation des Beleuchtungsbereichs und einer Steuerung zum Ansteuern der einzelnen steuerbaren Lichtquellen, ansprechend auf die erste Beleuchtungssituation, so dass die einzeln steuerbaren Lichtquellen eine unterschiedliche Lichtmenge abgeben, um eine zweite Beleuchtungssituation in dem Beleuchtungsbereich zu erzeugen, die gleichmäßiger ist als die erste Beleuchtungssituation.

Bei Ausführungsbeispielen kann die Steuerung zum Ansteuern von mehreren einzeln steuerbaren Lichtquellen die einzeln steuerbaren Lichtquellen, ansprechend auf die erste Beleuchtungssituation eines Beleuchtungsbereichs so ansteuern, dass die einzeln steuerbaren Lichtquellen in der Belichtungszeit die unterschiedliche Lichtmenge abgeben, um beispielsweise eine zweite Beleuchtungssituation mit gleichmäßiger Helligkeit in dem Beleuchtungsbereich zu erzeugen als die erste Beleuchtungssituation.

Beispielsweise kann der Bildsensor als Teil eines Bildaufnahmegeräts, beispielsweise einer Kamera, mit dem Erfasser und/oder mit der Steuerung elektrisch verbunden sein, um in der Belichtungszeit den Beleuchtungsbereich aufzunehmen.

Beispielsweise kann durch einen Triggerimpuls der Bildsensor aktiv geschaltet werden, so dass der Bildsensor das durch einen Verschluss einfallende Licht einfängt und ein erstes Bild bzw. eine erste Bildaufnahme des Beleuchtungsbereichs aufnimmt. Das Aufnehmen einer Bildaufnahme bedeutet dabei, dass der Beleuchtungsbereich, also ein Gesamtgesichtsfeld der Aufnahmevorrichtung vollständig auf den Bildsensor abgebildet wird.

Die einzeln steuerbaren Lichtquellen können Licht, beispielsweise einfarbig, mittels Leuchtdioden (LEDs), und/oder Infrarotstrahlung bzw. Wärmestrahlung, mittels Infrarot-Leuchtdioden, Quarzstrahler, Halogenstrahler oder Infrarotlampen, abgeben. Da farbige Leuchtdioden und Infrarot-Leuchtdioden zur Beleuchtung verwendet werden können, können beispielsweise zwei Bildsensoren in zwei unterschiedlichen Kameras so ausgelegt sein, dass sowohl eine Farb- als auch eine Infrarotaufnahme des Beleuchtungsbereichs bzw. der Szene in der Belichtungszeit erzeugt werden kann. Dabei ist die Farbwahl von weißen Leuchtdioden nicht beschränkt, so dass auch die Verwendung anderer Farben, wie beispielsweise gelb, grün, blau oder violett, möglich ist.

Bei Ausführungsbeispielen können die einzeln steuerbaren Lichtquellen beispielsweise um das Bildaufnahmegerät bzw. um den Bildsensor herum angeordnet sein. Beispielsweise kann die Anordnung der Lichtquellen die Form eines Ringblitzes oder die Form einer linear angeordneten Leuchtkette aufweisen. Es sei darauf hingewiesen, dass die Form bzw. die Anordnung der einzeln steuerbaren Lichtquellen nicht auf solche Ausführungsbeispiele beschränkt ist. Beispielsweise kann die Anordnung der einzeln steuerbaren Lichtquellen einen geschlossenen Polygonzug um den Beleuchtungsbereich an unterschiedlichen Orten bezüglich des Beleuchtungsbereichs aufweisen. Das bedeutet, dass die Anordnung der einzeln steuerbaren Lichtquellen zum Beleuchten des Beleuchtungsbereichs bezogen auf ein einen Mittelpunkt des Beleuchtungsbereichs innerhalb einer zweidimensionalen Ebene, in der die Lichtquellen angeordnet sind, symmetrisch sein kann. Alternativ oder zusätzlich können die einzeln steuerbaren Lichtquellen bezogen auf den Mittelpunkt des Beleuchtungsbereichs einen unterschiedlichen Abstand aufweisen. Das bedeutet, dass Lichtquellen beispielsweise in einer Ebene vor dem Bildsensor, mit geringerem Abstand, oder in einer Ebene hinter dem Bildsensor, mit größerem Abstand zum Mittelpunkt des Beleuchtungsbereichs angeordnet sein können. Ferner ist die Anordnung der einzeln steuerbaren Lichtquellen außerhalb des von der Aufnahmevorrichtung aufgespanntem Bildwinkels, oder Gesichtsfeldes.

Der Erfasser zum Erfassen der Beleuchtungssituationen des Beleuchtungsbereichs kann beispielsweise einen Blitzbelichtungsmesser oder einen Sensor aufweisen, der so angeordnet ist, dass dieser dem Beleuchtungsbereich zugewandt ist, um reflektierendes Licht eines im Beleuchtungsbereich angeordneten Objekts erfassen zu können, um eine erste Beleuchtungssituation zu erfassen. Darüber hinaus kann der Erfasser so angeordnet sein, dass dieser von dem Beleuchtungsbereich abgewandt ist, um Licht einer bereits vorhandenen Lichtquelle, beispielweise Sonnenlicht, erfassen zu können. Bei Ausführungsbeispielen kann der Erfasser sowohl mit der Lichtmessung als auch mit der Objektmessung arbeiten. Bei der Objektmessung bedeutet das, dass beispielsweise mit einem von der Kamera unabhängigem Handbelichtungsmesser, einem Belichtungsmesser an oder in der Kamera, das vom dem Objekt reflektierte Licht gemessen werden kann, um das Reflexionsvermögen des Objektes festzustellen. Bei der Lichtmessung bedeutet das, dass beispielsweise mit einem von der Kamera unabhängigem Handbelichtungsmesser, einem Belichtungsmesser an oder in der Kamera, Licht, welches das Objekt beleuchtet, gemessen werden kann, um die Helligkeit des Objekts gemäß ihrem visuellen Eindruck festzustellen, ohne das Reflexionsvermögen des Objekts zu berücksichtigen.

Bei Ausführungsbeispielen kann die Steuerung zum Ansteuern der einzeln steuerbaren Lichtquellen je nach der vom Erfasser erfassten Beleuchtungssituation die einzeln steuerbaren Lichtquellen beispielsweise separat ein- und ausschalten, so dass die einzeln steuerbaren Lichtquellen eine unterschiedliche Lichtmenge abgeben. Die Steuerung kann die einzeln steuerbaren Lichtquellen so ansteuern, dass eine zweite Beleuchtungssituation in dem Beleuchtungsbereich bereitgestellt werden kann, die gleichmäßiger ist als die vorhergehende, erste Beleuchtungssituation.

Mit anderen Worten kann mithilfe der Aufnahmevorrichtung ein Beleuchtungsbereich in einer Belichtungszeit gleichmäßig bzw. gleichmäßiger ausgeleuchtet werden, da die Aufnahmevorrichtung ausgebildet ist, basierend auf der vorhergehenden Bildaufnahme die Lichtmenge bedarfsgerecht in dem Beleuchtungsbereich in der Belichtungszeit einzustellen. Das erste Bild, bzw. die erste Abbildung in der Beleuchtungssituation des Beleuchtungsbereichs, bzw. Gesamtgesichtsfeldes kann mittels dem Erfasser analysiert werden, indem die Helligkeit basierend auf der Lichtmessung und/oder der Objektmessung festgestellt wird. Dabei kann der Erfasser ausgebildet sein, beispielsweise aus der ersten Bildaufnahme zu erfassen, ob die Helligkeit in der ersten Bildaufnahme gleich ist.

Bei Ausführungsbeispielen kann die Aufnahmevorrichtung unter Verwendung einer künstlichen Intelligenz oder Methoden einer künstlichen Intelligenz die erste Bildaufnahme so analysieren und dadurch erkennen, ob die erste Bildaufnahme eine gleichmäßige Helligkeit aufweist. Der Erfasser kann unter Verwendung einer Methode einer künstlichen Intelligenz, beispielsweise einer Bildaufnahmeuntersuchung, die erste Bildaufnahme in Bildsegmente bzw. Kacheln aufteilen und die segmentierten Bildabschnitte so analysieren und dadurch erkennen, ob alle Kacheln der ersten Bildaufnahme gleich hell sind. Indem die Helligkeit der einzeln segmentierten Bildabschnitte mit der Helligkeit der Bildaufnahme verglichen wird, kann für jede Kachel eine Helligkeitsabweichung erfasst werden. Bei einer erfassten Helligkeitsabweichung kann (für die nächste Bildaufnahme) die Beleuchtung so eingestellt werden, dass die Bildabschnitte mit einer geringeren Helligkeitsabweichung eine höhere Lichtmenge und die Bildabschnitte mit einer höheren Helligkeitsabweichung eine geringere Lichtmenge erhalten. Durch das separate Ansteuern der einzeln steuerbaren Lichtquellen können die Bildaufnahmen des Beleuchtungsbereichs fortlaufend gleichmäßig ausgeleuchtet werden.

Bei Ausführungsbeispielen kann für alle Lichtquellen diffuses Licht, beispielsweise mit einem Abstrahlwinkel von 180°, verwendet werden, deren Lichtmenge zeitlich geregelt ist. Alternativ oder zusätzlich ist auch eine Stromregelung der einzeln steuerbaren Lichtquellen, in der beispielsweise mittels Pulsweitenmodulation die Lichtstärken der einzeln steuerbaren Lichtquellen bei gleichbleibender Belichtungszeit bedarfsgerecht je nach Beleuchtungssituation erhöht oder verringert werden können.

Alternativ oder zusätzlich kann die Aufnahmevorrichtung mehrere Bildsensoren oder mehrere Bildsensorbereiche innerhalb einer multispektralen Kamera aufweisen, um Licht in einer ersten Wellenlänge, beispielsweise einfarbig, und Licht in einer zweiten Wellenlänge, beispielsweise Infrarotstrahlung, zu erfassen. Beispielsweise kann der Bildsensor mehrere Sildsensorbereiche umfassen, die Teil eines gemeinsamen Chips sind, kann aber alternativ auch mehrerer Komponenten aufweisen, das bedeutet, die Bildsensoren können auf unterschiedlichen Chips angeordnet sein.

Alternativ oder zusätzlich kann die Aufnahmevorrichtung mit einer Serienbildaufnahme die Leuchtdioden im Mikrosekundenbereich ein- und ausschalten, so dass die veränderte Einstellung der einzeln steuerbaren Lichtquellen und dadurch die Helligkeit von Bildaufnahme zu Bildaufnahme gleichmäßiger bzw. homogener ist verglichen mit der jeweils vorhergehenden Bildaufnahme.

Gemäß einem Ausführungsbeispiel können feingranulare Leuchtdiodensegmente, beispielsweise eine kleinere Anzahl von Lichtquellen, als eine Gesamtanzahl der Lichtquellen seriell geschaltet und mit einem von der Steuerung angesteuerten Schaltelement angesteuert werden, das beispielsweise eine Teilmenge oder Gruppe von Lichtquellen aufweist. Die Steuerung kann eine Gruppe von Lichtquellen ansteuern, die eine kleinere Anzahl von Lichtquellen als eine Gesamtanzahl der Lichtquellen umfasst, wie beispielsweise zwei, drei, vier oder fünf Lichtquellen. Es sei jedoch darauf hingewiesen, dass die Erfindung nicht auf die aufgeführte Anzahl der Lichtquellen in den Ausführungsbeispielen beschränkt ist.

Die Steuerung kann die einzeln steuerbaren Lichtquellen in Abhängigkeit der ersten Beleuchtungssituation ansteuern, so dass beispielsweise eine Teilmenge der einzeln steuer-, baren Lichtquellen länger leuchten kann als ein anderer Teil der einzeln steuerbaren Lichtquellen in der Belichtungszeit. Darüber hinaus ist es auch möglich, neben dem verlängerten Ausschaltzeitpunkt der einzeln steuerbaren Lichtquellen die Lichtstärke in der Belichtungszeit anzusteuern. Beispielsweise kann der durch die Steuerung eingestellte Strom bzw. die Stromstärke der Lichtquellen proportional zur abgebenden Lichtstärke in der Belichtungszeit sein. Somit kann die Aufnahmevorrichtung eine Stromregelung und/oder eine Zeitregelung aufweisen, um die unterschiedliche Lichtmenge der einzeln steuerbaren Lichtquellen ansprechend auf die erste Beleuchtungssituation einzustellen.

Der Bildsensor kann Teil einer Kamera, beispielsweise einer Multispektralkarnera, sein, um eine erste Bildaufnahme der Beleuchtungssituation aufzunehmen. Dabei kann der Erfasser ausgebildet sein, die erste Bildaufnahme des Bildsensors zu verwenden, um die erste Beleuchtungssituation des Beleuchtungsbereichs zu erfassen. Der Bildsensor und der Erfasser sind elektrisch, beispielsweise über Zuleitungen, Kabel oder Drähte miteinander verbunden, so dass der Bildsensor und der Erfasser gemeinsam und gleichzeitig mittels einem von einem Auslöser der Kamera ausgehenden Triggerimpuls angesteuert werden. Somit kann die erste Bildaufnahme aufgenommen und die erste Beleuchtungssituation des Beleuchtungsbereichs erfasst werden. Eigenschaften des Bildsensors, etwa Länge, Pixelgröße, Bildsensorbereiche oder physikalische Abmessung können variieren.

Gemäß einem weiteren Ausführungsbeispiel ist der Bildsensor ausgebildet, um eine zweite Bildaufnahme mit der zweiten Beleuchtungssituation aufzunehmen. Beispielsweise kann dies durch erneutes Drücken des Auslösers der Kamera, Steuerung-basiertes Auslösen des Triggerimpulses oder ein Drücken und Halten des Auslösers der Kamera im Sinne einer Serienbildaufnahme erfolgen. Beispielsweise ist es auch möglich, den Impuls über die Steuerung oder über eine externe Schnittstelle anzusteuern.

Ferner kann der Erfasser eine erste Helligkeitsinformation basierend auf der vom Bildsensor aufgenommenen ersten Bildaufnahme bestimmen. Die Steuerung kann in Abhängigkeit von der vom Erfasser bestimmten ersten Helligkeitsinformation eine veränderte Einstellung für die einzeln steuerbaren Lichtquellen bestimmen. Beispielsweise kann die veränderte Einstellung unterschiedliche Ausschaltzeitpunkte der jeweils einzeln steuerbaren Lichtquellen und/oder gleichzeitige Einschaltzeitpunkte der einzeln steuerbaren Lichtquellen umfassen. Somit kann die Aufnahmevorrichtung eine erste Helligkeitsinformation der ersten Bildaufnahme bestimmen, um eine veränderte Einstellung für eine unterschiedliche Lichtmenge der einzeln steuerbaren Lichtquellen basierend auf der ersten Helligkeitsinformation zu bestimmen.

Ferner kann der Erfasser die vom Bildsensor aufgenommene Bitdaufnahme in unterschiedliche Bildabschnitte aufteilen bzw. segmentieren. Die unterschiedlichen Bildabschnitte umfassen zumindest zwei, zumindest drei, zumindest vier oder eine höhere Anzahl, beispielsweise zumindest 10, zumindest 20 oder mehr Bildabschnitte. Eine Anzahl der unterschiedlichen Bildabschnitte kann hier beliebig sein. Die unterschiedlichen Bildabschnitte können eine beliebe Form aufweisen, beispielsweise eine Puzzleform, rechteckig oder quadratisch. Vorzugsweise ist die Form aller Kacheln und die Größe bzw. Fläche der Bildabschnitte gleich, was einem gleichen Flächeninhalt entspricht. Dadurch kann eine präzise erste Helligkeitsinformation von gleichförmigen und gleichgroßen Bildabschnitten bereitgestellt werden, in der sich die Helligkeit der Kacheln untereinander unterscheiden lassen kann.

Ferner wird die Helligkeitsinformation der Bildaufnahme den Positionsinformationen der einzeln steuerbaren Lichtquellen zugeordnet. Beispielsweise kann eine Verknüpfung eine Helligkeitsinformation und mehreren Positionsinformationen aufweisen, in der die Helligkeit des Bildabschnitts auf mehrere Lichtquellen basiert. Dadurch kann die Aufnahmevorrichtung feststellen, welche jeweilige Lichtquelle für weiche Helligkeit in welchem Bildabschnitt zuständig ist und in Abhängigkeit der ersten Helligkeitsinformation die jeweilige Lichtquelle für eine bedarfsgerechte Helligkeit in dem Bildabschnitt ansteuern. Da beispielsweise mehrere Bildaufnahmen pro Sekunde aufgenommen werden können, sind die sehr viel langsamer veränderlichen Verhältnisse vernachlässigbar.

Die Bildaufnahmeuntersuchung kann beispielsweise eine Bestimmungsvorschrift, Methoden einer künstlichen Intelligenz oder eine künstliche Intelligenz umfassen.

Jeder Bildabschnitt bzw. jeder segmentierte Bildabschnitt der Bildaufnahme kann auf dessen Helligkeit analysiert werden. Beispielsweise kann die Helligkeit für einen Bildabschnitt 0 aufweisen, das einem absolut dunklen Bildabschnitt entspricht und bis maximal 100 aufweisen, das beispielsweise einem absolut weißen Bildabschnitt entspricht. Anders gesagt kann die jeweilige Helligkeit der unterschiedlichen Bildabschnitte unterschiedliche Graustufen umfassen, beispielsweise einen Farbreiz, der dunkler ist als Weiß und heller als Schwarz, aber keinen oder nur einen geringen farbigen Eindruck aufweist. Unter dem vom Erfasser erfasste Helligkeitswert kann eine erste Helligkeitsinformation verstanden werden, das bedeutet, einen Wert, beispielsweise in Prozent der angibt, welche Helligkeit ein Bildabschnitt aufweist. Eine vergleichsweise höhere Helligkeit bedeutet somit, dass ein Bildabschnitt einer Bildaufnahme bei gleicher Beleuchtungssituation einen höheren Helligkeitswert, also einer helleren Graustufe entspricht als der gemittelte Helligkeitswert, also einer gemittelten Graustufe der Bildaufnahme.

Der Erfasser ist ausgebildet, den jeweiligen Bildabschnitt mit der mittleren Helligkeit der Bildaufnahme zu vergleichen, um eine Abweichung festzustellen, inwieweit die Helligkeit des jeweiligen Bildabschnitts von der mittleren Helligkeit der Bildaufnahme entfernt ist bzw. abweicht. Dabei können die Graustufen pro Bildabschnitt bzw. Kachel, beispielsweise von einer 99-prozentigen Helligkeit, bis hin zu einer 1-prozentigen Helligkeit mit der Graustufe der mittleren Helligkeit, beispielsweise einer 55-prozentigen Helligkeit, verglichen werden. Beispielsweise kann dieser Vergleich iterativ zu den Bildaufnahmen stattfinden, solange bis alle Kacheln gleich hell sind und/oder die gleiche Graustufe aufweisen und somit eine homogene Ausleuchtung des Beleuchtungsbereichs aufweisen.

Beispielsweise kann die vom Erfasser bereitgestellte erste Helligkeitsinformation der ersten Bildaufnahme eine Information über eine erhöhte Helligkeit in den unterschiedlichen Bildabschnitten, eine Information über eine niedrige Helligkeit in den unterschiedlichen Bildabschnitten und eine Information über eine gleichmäßige Helligkeit in den unterschiedlichen Bildabschnitten aufweisen, um die veränderte Einstellung der einzeln steuerbaren Lichtquellen basierend auf der von dem Erfasser bereitgestellten ersten Helligkeitsinformation der ersten Bildaufnahme mittels der Steuerung zu bestimmen. Beispielsweise kann die Information über eine erhöhte Helligkeit in dem jeweiligen Bildabschnitt über der mittleren Helligkeit der Bildaufnahme liegen und beispielsweise eine prozentuale Abweichung vom Mittelwert umfassen. Dies gilt ebenso für die Information über eine niedrige Helligkeit in den unterschiedlichen Bildabschnitten. Im Falle einer gleichmäßigen Helligkeit in den unterschiedlichen Bildabschnitten ist der Wert der Helligkeit in dem Bildabschnitt gleich der mittleren Helligkeit der Bildaufnahme und entspricht einer homogenen Ausleuchtung des Bildabschnitts.

Ferner wird eine Zuordnung zwischen der Position der Lichtquelle bezüglich des Beleuchtungsbereichs und dem jeweiligen Bildabschnitt der ersten Bildaufnahme bestimmt, indem die erste Helligkeitsinformation der ersten Bildaufnahme mit der unterschiedlichen Lichtmenge der einzeln steuerbaren Lichtquellen verknüpft wird. Dadurch kann die Steuerung die jeweilige Lichtquelle separat ansteuern, die beispielsweise näher einem dunklen Bildabschnitt zugeordnet ist und eine höhere Lichtmenge erfordert. Beispielsweise kann das Maß für eine Zuordnung dem jeweiligen Abstand der einzeln steuerbaren Lichtquelle zu dem Objekt in dem Beleuchtungsbereich bzw. der Szene entsprechen. Alternativ oder zusätzlich kann die Information der Ausrichtung der Aufnahmevorrichtung, beispielsweise im Hochformat oder im Querformat, in die Zuordnung mit einbezogen werden. Indem beispielsweise eine Lichtquelle einer Kachel zugeordnet ist, kann ein der Lichtquelle und der Kachel zugeordneter Bereich der Szene bedarfsgerecht mit Licht beleuchtet bzw. mit der erforderlichen Lichtmenge zugeführt werden. Darüber hinaus ist es auch möglich, dass durch die Steuerung unterschiedliche Bereiche der LED-Lampen bzw. Lichtquellen separat zeitlich angesteuert werden, um die homogene Ausleuchtung der Szene zu erreichen. Das bedeutet, dass basierend auf den verknüpften Helligkeits-, und Positionsinformationen die einzeln steuerbaren Lichtquellen gruppiert angesteuert werden können, so dass ein Signal genau die Teilmenge der gesamten Lichtquellen ansteuert, die für die Helligkeitsabweichung in dem jeweiligen Bildabschnitt verantwortlich ist. Dies kann für die Bildverarbeitungsuntersuchung, z. B. unter Verwendung von Methoden einer künstlichen Intelligenz, vorteilhaft sein. Indem die Beleuchtungsvariation in die Bildverarbeitungsuntersuchung aufgenommen wird, kann die Anzahl der notwendigen Lernstichproben gering gehalten werden, was eine leichte Implementierung ermöglicht.

Die veränderte Einstellung der einzeln steuerbaren Lichtquellen basiert auf der ersten Helligkeitsinformation der ersten Bildaufnahme und der Zuordnung. Dadurch kann eine präzise Helligkeitseinstellung bedarfsgerecht je nach Beleuchtungssituation eingestellt werden. Darüber hinaus kann eine energieeffiziente Helligkeitseinstellung vorgenommen werden, da nur die Lichtquellen länger leuchten, dessen zugeordneter Bildabschnitt eine niedrigere Helligkeit aufweist.

Die Steuerung ist ausgebildet, um basierend auf der Information über die erhöhte Helligkeit in den unterschiedlichen Bildabschnitten die unterschiedliche Lichtmenge der einzeln steuerbaren Lichtquellen in der zweiten Beleuchtungssituation in der Belichtungszeit zu verringern, so dass die unterschiedlichen Bildabschnitte mit der erhöhten Helligkeit bei der zweiten Bildaufnahme eine geringere Lichtmenge erhalten als bei der ersten Bildaufnahme. Die Steuerung ist ferner ausgebildet, um basierend auf der Information über die niedrigere Helligkeit in den unterschiedlichen Bildabschnitten die unterschiedliche Lichtmenge der einzeln steuerbaren Lichtquellen in der zweiten Beleuchtungssituation in der Belichtungszeit zu erhöhen, so dass die unterschiedlichen Bildabschnitte mit der niedrigeren Helligkeit bei der zweiten Bildaufnahme eine höhere Lichtmenge erhalten als bei der ersten Bildaufnahme. Durch diese variable Steuerung der Lichtmengen kann jeder Bildabschnitt mit einer Helligkeitsabweichung bei der ersten Bildaufnahme erkannt und in der zweiten Beleuchtungssituation angepasst werden, so dass eine homogenere Ausleuchtung des Beleuchtungsbereichs erreicht wird. Dadurch ist sichergestellt, dass beispielsweise Licht der benachbarten Lichtquellen die zweite Beleuchtungssituation unbeeinflusst lässt. Alternativ oder zusätzlich kann die erste Helligkeitsinformation bzw. auch die zusammengeführte erste Helligkeitsinformation der ersten Bildaufnahme bei Bedarf tiefpassgefiltert werden, um Schwingungen oder schnelle Änderungen zu vermeiden.

Die Steuerung kann die Lichtmenge der Lichtquellen anpassen, indem beispielsweise eine Teilmenge der einzeln steuerbaren Lichtquellen unterschiedliche Ausschaltzeitpunkte aufweisen als ein anderer Teil der einzeln steuerbaren Lichtquellen, um die Helligkeitsabweichungen in den unterschiedlichen Bildabschnitten in der Belichtungszeit zu verringern. Um eine energieeffiziente Vorrichtung zu gewährleisten, ist die Steuerung ausgebildet, die einzeln steuerbaren Lichtquellen gleichzeitig, beispielsweise in der Belichtungszeit oder mit der Belichtungszeit, einzuschalten.

Eine Teilmenge der einzeln steuerbaren Lichtquellen kann stärker leuchten bzw. eine höhere Lichtstärke aufweisen als ein beispielsweise benachbarter Teil der einzeln steuerbaren Lichtquellen, um eine gleichmäßige Ausleuchtung der Szene zu erhalten.

Beispielsweise können drei nebeneinander angeordnete Lichtquellen, wobei eine mit einer individuellen Lichtstärke stärker als die zwei benachbarten Lichtquellen leuchtet, die gleiche Lichtmenge aufweisen wie beispielsweise drei nebeneinander angeordnete Lichtquellen mit einer gleichen Lichtstärke. Basierend auf der ersten Helligkeitsinformation der ersten Bildaufnahme ist es erforderlich, eine Teilmenge der einzeln steuerbaren Lichtquellen mit gleicher Lichtstärke einzustellen und eine andere Teilmenge der einzeln steuerbaren Lichtquellen mit einer individuellen Lichtstärke in der Belichtungszeit einzustellen, um den jeweiligen zugeordneten Bildabschnitt bzw. Kachel homogen auszuleuchten.

Beispielsweise kann ein erster Wellenlängenbereich einfarbiges Licht, wie beispielsweise durch weiße Leuchtdioden erzeugt, umfassen. Hierzu kann beispielsweise ein zweiter Wellenlängenbereich der einzeln steuerbaren Lichtquellen einen Wellenlängenbereich im Infrarotspektrum umfassen. Indem der Bildsensor und der Erfasser jeweils ausgebildet sind, die beiden Wellenlängenbereiche aufzunehmen bzw. zu erfassen, kann sowohl eine Farbals auch eine Infrarotaufnahme des Beleuchtungsbereichs bzw. der Szene erzeugt werden. Darüber hinaus ist es auch möglich, andere Farben des Lichtspektrums, wie beispielsweise rot, grün oder lila, für die Aufnahmevorrichtung zu verwenden. Eine Farbe der Lichtquelle kann hier beliebig sein.

Unter Belichtungszeit kann eine Beleuchtungszeit der Lichtquellen verstanden werden, d.h. eine Zeitspanne, die angibt, wie lange der Bildsensor den Beleuchtungsbereich aufnehmen kann. Mit anderen Worten umfasst die Belichtungszeit einen Startzeitpunkt und einen Endzeitpunkt, in der der Bildsensor den Beleuchtungsbereich aufnehmen kann. Diese Belichtungszeit entspricht beispielsweise einer Verschlusszeit einer Kamera bzw. einer Multispektratkamera und kann unabhängig bezogen auf den Einschaltzeitpunkt der einzeln steuerbaren Lichtquellen mittels der Steuerung angesteuert werden. Innerhalb der Belichtungszeit bzw. der Zeitspanne, in der der Bildsensor das Licht aufnehmen kann, können die einzeln steuerbaren Lichtquellen separat angesteuert werden, so dass beispielsweise eine Lichtquelle in der Belichtungszeit bzw. während der Belichtungszeit ein- und ausgeschaltet wird, oder in der Belichtungszeit eingeschaltet und nach dem Ende der Belichtungszeit ausgeschaltet wird. Beispielsweise ist die Steuerung ausgebildet, die einzeln steuerbaren Lichtquellen gleichzeitig am Start der Belichtungszeit einzuschalten oder auch kurz vor dem Start der Belichtungszeit einzuschalten. Mittels der Steuerung kann die unterschiedliche Lichtmenge während der Belichtungszeit ansprechend auf die erste Beleuchtungssituation angepasst bzw. variiert werden, indem, wie bereits erläutert, die Stromstärke der Lichtquellen und/oder die Leuchtdauer geregelt wird. Neben der unterschiedlichen Lichtmenge der einzeln steuerbaren Lichtquellen werden auch nur die jeweiligen Lichtquellen angesteuert, die beispielsweise einen dunkleren Bildabschnitt heller beleuchten sollen, basierend auf der Zuordnung mit der ersten Helligkeitsinformation.

Die Steuerung kann den Einschaltzeitpunkt der einzeln steuerbaren Lichtquellen unabhängig der Belichtungszeit bzw. dem Start der Belichtungszeit ansteuern, so dass die einzeln steuerbaren Lichtquellen am oder vor dem Start der Belichtungszeit eingeschaltet werden. Basierend auf der ersten Beleuchtungssituation ist die Steuerung ausgebildet, auszuwählen, welche jeweilige Lichtquelle und/oder welche Teilmenge der Lichtquellen angesteuert werden soll und welche Lichtmenge die jeweilige Lichtquelle und/oder welche Teilmenge der Lichtquellen erzeugen soll. Indem die Steuerung ausgebildet ist, die Zeitspanne der Einschaltzeit bzw. Ausschaltzeit der Lichtquellen zu steuern, können die einzeln steuerbaren Lichtquellen nach dem Ende der Belichtungszeit, während der Belichtungszeit oder gleichzeitig am bzw. zum Ende der Belichtungszeit ausgeschaltet werden. Dadurch ist es möglich, die zweite Beleuchtungssituation energieeffizient und mit geringem Implementierungsaufwand zu erzeugen.

Der Beleuchtungsbereich kann beispielsweise kreisförmig, oval, quadratisch oder rechteckig sein, der beispielsweise durch den Bildsensor oder einen Teil des Bildsensors erfasst bzw. aufgenommen wird. Der Beleuchtungsbereich kann einem Gesichtsfeld innerhalb eines Raumes, wie beispielsweise das eines Fotostudios oder einer Halle oder außerhalb eines Raumes, wie beispielsweise auf einem Feld oder auf einer Wiese, entsprechen. Alternativ oder zusätzlich kann im Beleuchtungsbereich ein Objekt so vor der Kamera positioniert sein, dass das Objekt auf der Bildaufnahme groß und detailliert aufgenommen wird, beispielsweise wenn die Bildaufnahme des Objekts auf dem Bildsensor genauso groß erscheint wie das Objekt selbst, oder beispielsweise wenn der Maßstabbereich der Bildaufnahme und des Objekts zwischen 1:10 und 10:1 aufweist.

Die erste Beleuchtungssituation kann eine Situation in teilweiser Dunkelheit, beispielsweise bei Straßenlaternenlicht, Mondlicht, Stadtlicht oder in vollkommener Dunkelheit ohne vorhandenes Licht, aufweisen.

Bei Beleuchtungssituationen in der Dunkelheit, den sogenannten Nachtaufnahmen, kann die von der Aufnahmevorrichtung bereitgestellte Lichtmenge der einzeln steuerbaren Lichtquellen einer Helligkeit vergleichbar mit der der Sonne entsprechen. Durch das erfindungsgemäße Konzept kann diese Energiemenge auch bei Dunkelheit, beispielsweise in der Nacht, energieeffizient bereitgestellt werden, da wie bereits erwähnt, die Beleuchtung nur dann eingeschaltet wird, wenn die Kamera lichtempfindlich ist bzw. der Bildsensor aktiv geschaltet oder der Verschluss der Kamera geöffnet ist. Mit anderen Worten ist die Beleuchtung mit dem Verschluss der Kamera so verbunden, dass die einzeln steuerbaren Lichtquellen synchron mit dem Triggerimpuls der Kamera bzw. der Kameras eingeschaltet werden. Trotz Veränderungen der Beleuchtungssituation, beispielsweise hervorgerufen durch erhöhtes Wolkenaufkommen, Mondlicht, Schattenbildung, Tag, Nacht, reflektiertes Licht innerhalb des Beleuchtungsbereichs, bereits vorhandenes direktes oder indirektes Licht im Beleuchtungsbereich ist der Erfasser ausgebildet, Veränderungen der Beleuchtungssituation zu erkennen, um die erste Beleuchtungssituation zu erfassen, um die erste Helligkeitsinformation der ersten Bildaufnahme zu bestimmen.

Beispielsweise können die einzeln steuerbaren Lichtquellen nur dann eingeschaltet werden, wenn ein Verschluss der Kamera geöffnet ist. Mit anderen Worten ist die Beleuchtung mit dem Verschluss der Kamera, beispielsweise Trigger, so verbunden, dass die Beleuchtungen bzw. die einzeln steuerbaren Lichtquellen zum Beleuchten des Beleuchtungsbereichs synchron mit dem Triggerimpuls der Kamera eingeschaltet werden. Bei bereits vorhandenem Licht, wie beispielsweise bei Sonnenlicht, kann eine seitliche Einstrahlung der Sonne tagsüber kompensiert werden, indem jede der einzeln steuerbaren Lichtquellen unterschiedlich hell leuchten bzw. so eingestellt werden, dass sie eine unterschiedliche Lichtmenge in der Belichtungszeit abgeben. Das bedeutet, dass alle einzeln steuerbaren Lichtquellen gleichzeitig eingeschaltet, aber je nach Bedarf nach unterschiedlicher Zeit abgeschaltet werden. Der Bedarf ist eine erste Helligkeitsinformation der ersten Bildaufnahme, die beispielsweise von einem Erfasser bestimmt wird. Diese Helligkeitsinformation kann von der Steuerung erfasst werden, um eine veränderte Einstellung der einzeln steuerbaren Lichtquellen in Abhängigkeit von der ersten Helligkeitsinformation zu bestimmen. So kann unterschiedlichen Bereichen des Beleuchtungsbereichs bzw. der Szene bedarfsgerecht Licht zugeführt werden. Um eine möglichst hohe Energieeffizienz erreichen zu können, werden Kondensatoren in direkter Nähe der einzeln steuerbaren Lichtquellen platziert, was die Energieverluste minimiert. Beim Einschalten verteilt sich der Einschaltstrom auf viele kleine Schaltelemente, die jeweils nur einen sehr viel geringeren Strom schalten müssen.

Der Einschaltstrom für die Gesamtmenge an Lichtquellen kann mehrere 100 Ampere betragen. Indem für jede Lichtquelle oder jede Teilmenge von Lichtquellen auf dem Substrat jeweils ein Kondensator und jeweils ein Schalter verwendet werden und die jeweiligen Kondensatoren und die jeweiligen Schalter und die jeweiligen Lichtquellen oder die jeweilige Teilmenge von Lichtquellen zueinander parallel geschaltet sind, verteilt sich der Einschaltstrom auf eine Vielzahl von Kondensatoren und Schalter, die jeweils nur einen sehr viel geringeren Strom schalten müssen. Die Vielzahl von Kondensatoren können daher den Einschaltstrom für die kurze notwendige Zeit bereitstellen, ohne dass ein erheblicher Spannungsabfall durch den Leitungswiderstand zu den jeweiligen Lichtquellen eintritt. Daher ist es vorteilhaft, die einzeln steuerbaren Lichtquellen separat ansteuern zu können.

Durch die erfindungsgemäße Anordnung eines Kondensators in direkter Nähe der Lichtquellen können die Energieverluste beim Einschalten minimiert werden, da ein zentraler elektronischer Schalter entfällt und sich der eingeschaltete Strom auf viele kleine Schaltelemente verteilt, die jeweils nur einen sehr viel geringeren Strom schalten müssen.

Die Steuerung kann ausgebildet sein, um die Belichtungszeit für den Bildsensor zeitgleich mit dem Einschaltzeitpunkt der jeweiligen Schalter der jeweiligen Lichtquelle einzuschalten, so dass sich der Verschluss zwischen dem Bildsensor und dem Beleuchtungsbereich öffnet und der Bildsensor der unterschiedlichen Lichtmenge des Beleuchtungsbereichs ausgesetzt ist. Das bedeutet, dass vor dem Start der Belichtungszeit die einzeln steuerbaren Lichtquellen mittels der Steuerung ausgeschaltet sind bzw. ausgeschaltet gehalten werden, um erst beispielsweise über den Triggerimpuls die jeweiligen Lichtquellen einzuschalten. Wie bereits erwähnt kann die Lichtmenge bzw. die unterschiedliche Lichtmenge der einzeln steuerbaren Lichtquellen variiert werden, indem die Steuerung den Einschaltzeitpunkt der jeweiligen Lichtquelle zeitgleich mit dem Einschalten mit dem Beginn oder in der Belichtungszeit zu wählen. Dadurch kann die Aufnahmevorrichtung mittels der variablen Steuerung die Beleuchtung individuell und energieeffizient und bedarfsgerecht je nach Beleuchtungssituation homogen ausleuchten.

Ein Ausführungsbeispiel gemäß der vorliegenden Erfindung umfasst ein Verfahren zum Bereitstellen einer Aufnahmevorrichtung. Das Verfahren kann optional um alle Merkmale, Funktionalitäten und Details ergänzt werden, die hierin auch im Hinblick auf die erfindungsgemäße Vorrichtung beschrieben sind. Das Verfahren kann um die genannten Merkmale, Funktionalitäten und Details sowohl einzeln als auch in Kombination ergänzt werden.

Ein weiteres Ausführungsbeispiel gemäß der vorliegenden Erfindung umfasst ein Computerprogramm mit einem Programmcode zur Durchführung des Verfahrens, wenn das Programm auf dem Computer läuft.

Ausführungsbeispiele liefern einen verbesserten Kompromiss zwischen Einsatzmöglichkeit, Energieeffizienz und Implementierungsaufwand. Ferner erlauben es Ausführungsbeispiele, dass der Aufwand für eine künstliche Intelligenz gering gehalten werden kann, da die Klassifikationsaufgabe und das Mitlernen sämtlicher Beleuchtungsvariationen entfallen können.

Bevorzugte Ausführungsbeispiele der vorliegenden Erfindung werden nachfolgend bezugnehmend auf die beiliegenden Zeichnungen erläutert. Es zeigen:
- Fig. 1: eine schematische Darstellung einer Aufnahmevorrichtung gemäß einem Ausführungsbeispiel, die eine zweite Beleuchtungssituation gleichmäßiger beleuchtet als eine erste Beleuchtungssituation;
- Fig. 2: eine schematische Blockdarstellung einer Steuerung gemäß einem Ausführungsbeispiel, die mehrere einzeln steuerbare Lichtquellen ansteuert;
- Fig. 3: eine schematische Blockdarstellung eines Bildsensors gemäß einem Ausführungsbeispiel, der einen Beleuchtungsbereich in einer Belichtungszeit aufnimmt;
- Fig. 4: eine schematische Blockdarstellung eines Erfassers gemäß einem Ausführungsbeispiel, der eine erste Beleuchtungssituation des Beleuchtungsbereichs aus der ersten Bildaufnahme erfasst und eine erste Helligkeitsinformation bestimmt;
- Fig. 5: eine schematische Darstellung einer ersten Beleuchtungssituation gemäß einem Ausführungsbeispiel;
- Fig. 6: eine schematische Darstellung einer zweiten Beleuchtungssituation gemäß einem Ausführungsbeispiel;
- Fig. 7A: eine schematische Darstellung von einzeln steuerbaren Lichtquellen gemäß einem Ausführungsbeispiel, die einen Beleuchtungsbereich mit individueller Lichtstärke ausleuchten;
- Fig. 7B: eine schematische Darstellung von einzeln steuerbaren Lichtquellen gemäß einem Ausführungsbeispiel, die einen Beleuchtungsbereich mit gleicher Lichtstärke ausleuchten;
- Fig. 8: ein schematisches Diagramm von einzeln steuerbaren Lichtquellen und einem Bildsensor gemäß einem Ausführungsbeispiel;
- Fig. 9A: ein schematisches Blockschaltbild der Aufnahmevorrichtung gemäß einem Ausführungsbeispiel;
- Fig. 9B: eine schematische Darstellung einer Schaltzeichnung der Aufnahmevorrichtung gemäß einem Ausführungsbeispiel;
- Fig. 10: eine schematische Darstellung einer Aufnahmevorrichtung gemäß einem Ausführungsbeispiel, bei der einzeln steuerbaren Lichtquellen ringförmig um einen Beleuchtungsbereich angeordnet sind; und
- Fig.11 mevorrichtung.: eine schematische Darstellung eines Verfahrens zum Bereitstellen einer Aufnah-

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlicfien Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres miteinander kombiniert werden, solange es nicht explizit gegenteilig beschrieben ist.

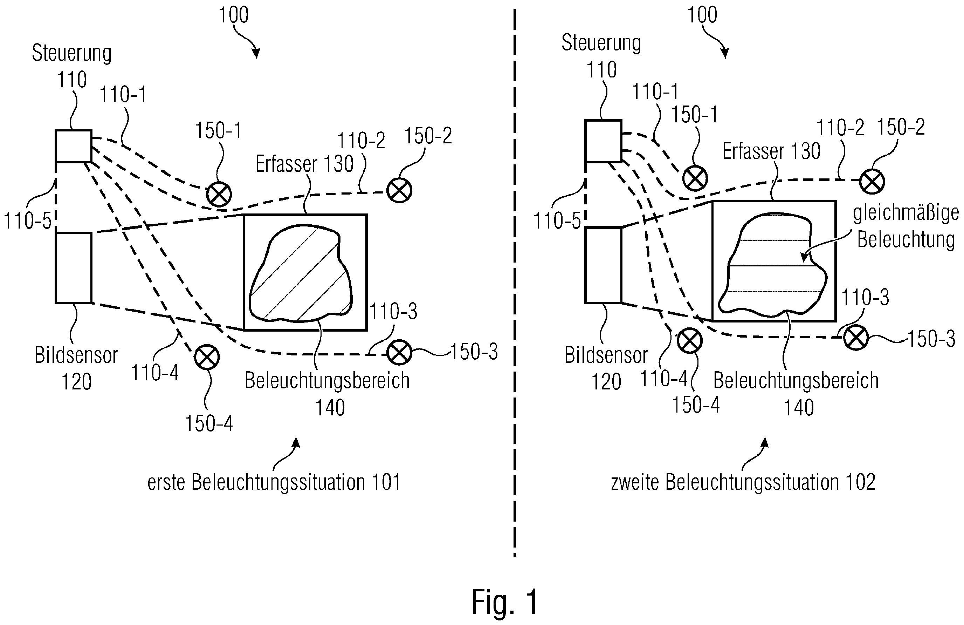

Fig. 1 zeigt eine schematische Darstellung einer Aufnahmevorrichtung 100, die eine zweite Beleuchtungssituation 102 gleichmäßiger beleuchtet als eine erste Beleuchtungssituation 101. Die beispielhafte schematische Darstellung der Aufnahmevorrichtung 100 umfasst beispielsweise eine Steuerung 110, einen Bildsensor 120 und einen Erfasser 130, der die erste Beleuchtungssituation und beispielsweise auch die zweite Beleuchtungssituation 102 des Beleuchtungsbereichs 140 erfasst. Die einzeln steuerbaren Lichtquellen 150-1, 150-2, 150-3 und 150-4 sind beispielsweise über die elektrische Verbindung 110-1, 110-2, 110-3 und 110-4 mit der Steuerung 110 verbunden. Die Steuerung 110 ist ausgebildet, die einzeln steuerbaren Lichtquellen 150-1, 150-2, 150-3 und 150-4 ansprechend auf die erste Beleuchtungssituation 101 anzusteuern, so dass die einzeln steuerbaren Lichtquellen 150-1, 150-2, 150-3, 150-4 eine unterschiedliche Lichtmenge abgeben, um eine zweite Beleuchtungssituation 102 in dem Beleuchtungsbereich 140 zu erzeugen, die gleichmäßiger ist als die erste Beleuchtungssituation 101. Dargestellt ist diese gleichmäßige Beleuchtung des Beleuchtungsbereichs 140 durch horizontale, parallel verschobene Linien im Beleuchtungsbereich 140 innerhalb der zweiten Beleuchtungssituation 102. Beispielsweise ist der Bildsensor 120 über die elektrische Verbindung 110-5 ebenfalls mit der Steuerung 110 verbunden, so dass ein Triggerimpuls zum Einschalten der einzeln steuerbaren Lichtquellen 150-1, 150-2, 150-3, 150-4 gleichzeitig mit dem Einschalten des Bildsensors 120 erfolgen kann, um eine erste Bildaufnahme des Beleuchtungsbereichs 140 mittels dem Bildsensor 120 bereitzustellen bzw. aufzunehmen. Basierend auf ersten Beleuchtungssituation 101 kann die Aufnahmevorrichtung 100 die einzeln steuerbaren Lichtquellen 150-1, 150-2, 150-3, 150-4 separat mittels der Steuerung 110 ansteuern, so dass die zweite Be-leuchtungssituation 102 eine homogenere Ausleuchtung des Beleuchtungsbereichs 140 aufweist.

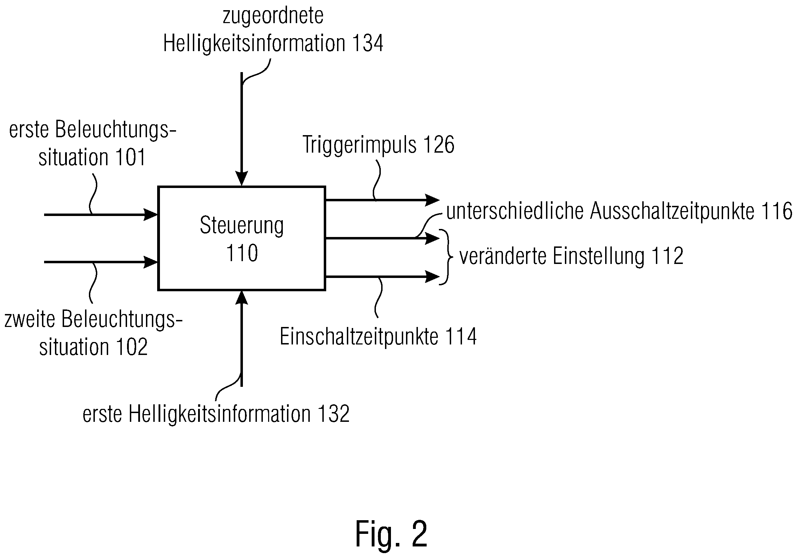

Fig. 2 zeigt eine schematische Blockdarstellung einer Steuerung 110 gemäß einem Ausführungsbeispiel, die mehrere einzeln steuerbare Lichtquellen ansteuert. Die dargestellte Steuerung 110 kann beispielsweise eine eingehende erste Beleuchtungssituation 101 bzw. eine Information der ersten Beleuchtungssituation 101, eine eingehende zweite Beleuchtungssituation 102, eine eingehende erste Helligkeitsinformation 132 und eine eingehende zugeordnete Helligkeitsinformation 134 verarbeiten, um eine veränderte Einstellung 112 der einzeln steuerbaren Lichtquellen 150-1, 150-2, 150-3, 150-4 in Abhängigkeit von der ersten Helligkeitsinformation 132 zu bestimmen. Wie in Fig. 2 dargestellt ist, kann die von der Steuerung 110 bereitgestellte veränderte Einstellung 112 beispielsweise unterschiedliche Ausschaltzeitpunkte 116 und Einschaltzeitpunkte 114 zum Ansteuern der einzeln steuerbaren Lichtquellen 150-1, 150-2, 150-3, 150-4 umfassen. Der von der Steuerung 110 ausgehende Triggerimpuls 126 kann, beispielsweise über die elektronischen Verbindungen 110-1, 110-2, 110-3, 110-4, 110-5, die einzeln steuerbaren Lichtquellen 150-1, 150-2, 150-3, 150-4, den Erfasser 130 und den Bildsensor 120 gleichzeitig und synchron einschalten, um eine erste Bildaufnahme 122 aufzunehmen.

Somit kann die Steuerung 110 basierend auf der ersten Helligkeitsinformation 132 und der Information der ersten Beleuchtungssituation 101 eine veränderte Einstellung 112 bereitstellen, so dass eine unterschiedliche Lichtmenge von den einzeln steuerbaren Lichtquellen 150-1, 150-2, 150-3, 150-4 in dem Beleuchtungsbereich 140 abgegeben werden kann.

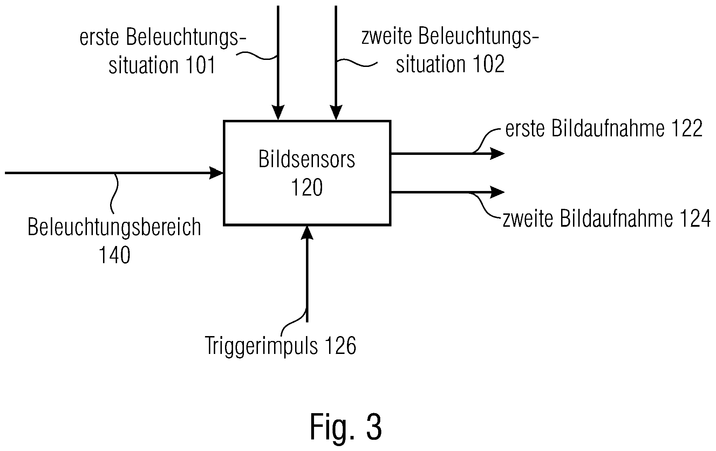

Fig. 3 zeigt eine schematische Blockdarstellung eines Bildsensors 120 gemäß einem Ausführungsbeispiel, der einen Beleuchtungsbereich 140 je nach Beleuchtungssituation 101, 102 in einer Belichtungszeit aufnimmt, um eine erste Bildaufnahme 122 aufzunehmen. Ferner ist der Bildsensor 120 ausgebildet, um eine zweite Bildaufnahme 124 mit der zweiten Beleuchtungssituation 102 aufzunehmen. Über die elektrische Verbindung 110-5 zwischen der Steuerung 110 und dem Bildsensor 120 kann die Steuerung 110 über den Triggerimpuls 126 die Belichtungszeit für den Bildsensor 120 beispielsweise zeitgleich mit der jeweiligen Lichtquelle einschalten. Somit kann der Bildsensor 120 den Beleuchtungsbereich 140 über einen Triggerimpuls 120 der Steuerung 110 in der Belichtungszeit aufnehmen und die erste Bildaufnahme 122 bereitstellen.

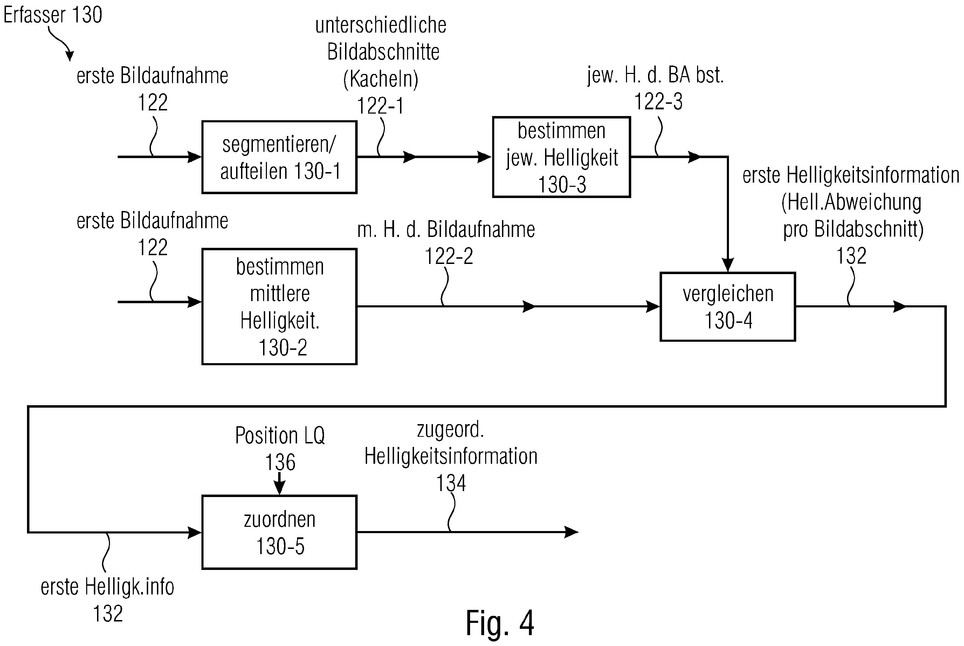

Fig. 4 zeigt eine schematische Blockdarstellung eines Erfassers 130 gemäß einem Ausführungsbeispiel, der eine erste Beleuchtungssituation 101 des Beleuchtungsbereichs 140 aus der ersten Bildaufnahme 122 erfasst und eine erste Helligkeitsinformation 132 bestimmt. Die von dem Bildsensor 120 ausgehende erste Bildaufnahme 122 wird vom Erfasser 130 erfasst und in verschiedene bzw. gleich große Segmente aufgeteilt 130-1, so dass unterschiedliche Bildabschnitte 122-1 der ersten Bildaufnahme 122 bestimmt werden. Der Erfasser 130 ist ausgebildet, die erste Bildaufnahme 122 in unterschiedliche Bildabschnitte 122-1 mittels einer Segmentierung bzw. Aufteilung 130-1 aufzuteilen. Darüber hinaus kann der Erfasser 130 eine mittlere Helligkeit der ersten Bildaufnahme 122-2 mittels einer mittleren Helligkeitsbestimmung 130-2 bestimmen. Die mittlere Helligkeit der ersten Bildaufnahme 122-2 wird mit einer jeweiligen Helligkeit der unterschiedlichen Bildabschnitte 122-3 durch einen Vergleich 130-4 verglichen, um die erste Helligkeitsinformation 132 bereitzustellen. Um beispielsweise eine zugeordnete erste Helligkeitsinformation 134 zu erhalten, kann die erste Helligkeitsinformation 132 mittels einer Zuordnung 130-5 mit der Position der jeweils einzeln steuerbaren Lichtquellen 136 zugeordnet werden. Indem beispielsweise eine Zuordnung zwischen den unterschiedlichen Orten der an unterschiedlichen Orten angeordneten einzeln steuerbaren Lichtquellen und der ersten Helligkeitsinformation 132 zugeordnet wird, kann eine erste Helligkeitsinformation 132 mit der Position der Lichtquelle 132 als zugeordnete Helligkeitsinformation 134 bestimmt werden. Somit kann der Erfasser 130 die erste Bildaufnahme 122 verwenden, um eine erste Helligkeitsinformation 132 zu bestimmen, die sagt, welcher jeweilige segmentierte Bildabschnitt der ersten Bildaufnahme 122 eine Helligkeitsabweichung gegenüber der mittleren Helligkeit 122-2 der ersten Bildaufnahme aufweist. Indem die erste Helligkeitsinformation 132 der bzw. einer jeweiligen Position der einzeln steuerbaren Lichtquellen 136 zugeordnet wird, kann die Steuerung 110, wie in Fig. 2 gezeigt, eine veränderte Einstellung 112 der einzeln steuerbaren Lichtquellen 150-1, 150-2, 150-3, 150-4 bereitstellen. Dadurch kann die Lichtmenge für die unterschiedlichen Bildabschnitte energieeffizient eingestellt werden.

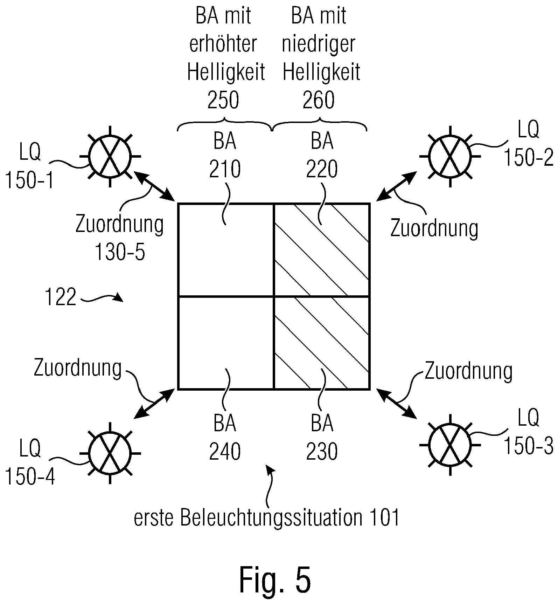

Fig. 5 zeigt eine schematische Darstellung einer ersten Beleuchtungssituation 101 gemäß einem Ausführungsbeispiel. In dieser aufgezeigten beispielhaften Darstellung einer ersten Beleuchtungssituation 101 sind beispielsweise vier einzeln steuerbare Lichtquellen 150-1, 150-2, 150-3, 150-4 um einen Beleuchtungsbereich 140 (nicht dargestellt) angeordnet. Beispielsweise sind die Lichtquellen 150-1, 150-2, 150-3, 150-4 um die erste Bildaufnahme 122 angeordnet und mittels der Zuordnung 130-5 hier beispielsweise einem jeweiligen Bildabschnitt 210-240 zugeordnet. Beispielsweise ist die Lichtquelle 150-1 dem Bildabschnitt 210, die Lichtquelle 150-2 dem zweiten Bildabschnitt 220, die Lichtquelle 150-3 dem Bildabschnitt 230 und die Lichtquelle 150-4 dem Bildabschnitt 240 zugeordnet. Die Lichtquellen 150-1 und 150-4 sind beispielsweise, wie in Fig. 5 dargestellt, gegenüber den Lichtquellen 150-2 und 150-3 angeordnet, umfassen beispielsweise eine höhere Lichtstärke, und können eine höhere Lichtmenge als die Lichtquellen 150-2 und 150-3 aufweisen. Die höheren Lichtmengen der zwei Lichtquellen 150-1 und 150-4 resultieren in einer erhöhten Helligkeit der Bildabschnitte 210 und 240, was beispielsweise dem linken Bildabschnitt mit höherer Helligkeit 250 entspricht. Verglichen mit den Bildabschnitten mit der niedrigeren Helligkeit 260, umfassend den Bildabschnitten 220 und 230, sind die Bildabschnitte mit erhöhter Helligkeit 250 einer höheren Lichtmenge in der Belichtungszeit ausgesetzt bzw. ausgesetzt worden.

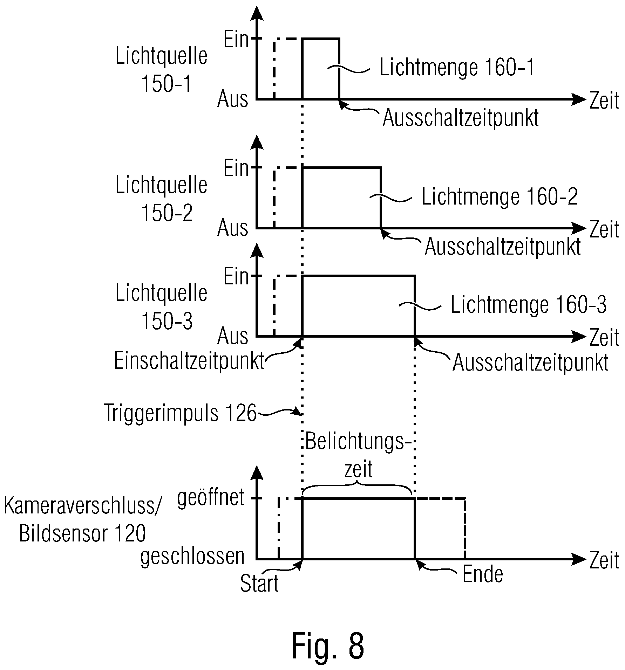

Beispielsweise können innerhalb der ersten Beleuchtungssituation 101 alle vier Lichtquellen 150-1, 150-2, 150-3, 150-4 eine gleiche Lichtstärke und eine unterschiedliche Lichtmenge, eine unterschiedliche Lichtstärke und eine unterschiedliche Lichtmenge oder eine gleiche Lichtstärke und eine gleiche Lichtmenge aufweisen. Diese Kombination kann mittels der unterschiedlichen Ausschaltzeitpunkte der Lichtquellen erreicht werden, die in Fig. 8 näher erläutert ist.

Obwohl die Fig. 5 so dargestellt ist, dass sich die Lichtquellen 150-1, 150-2, 150-3, 150-4 benachbart zu den Bildabschnitten 210 bis 240 befinden, sind beliebige andere Ausgestaltungen möglich, etwa eine Position oberhalb oder unterhalb, lateral benachbart und/oder ringförmig umschlossen zueinander.

Es sei allerdings darauf hingewiesen, dass eine Vielzahl von einzeln steuerbaren Lichtquellen um einen nicht dargestellten Beleuchtungsbereich 140 angeordnet sein kann, um eine erste Beleuchtungssituation 101 zu beleuchten. Ferner sei darauf hingewiesen, dass die erste Bildaufnahme 122 eine Vielzahl von Bildabschnitten aufweisen kann, so dass beispielsweise die Anzahl der Bildabschnitte und die Anzahl der einzeln steuerbaren Lichtquellen beliebig sein kann. Darüber hinaus ist es nicht zwingend erforderlich, die Zuordnung 130-5 für jeweils eine Lichtquelle und jeweils einen Bildabschnitt zu bestimmen. Beispielsweise ist es auch möglich, dass eine einzeln steuerbare Lichtquelle mehreren Bildabschnitten zugeordnet sein kann, oder mehrere Lichtquellen mehreren Bildabschnitten beispielsweise lateral benachbart oder distal benachbart zugeordnet sein können.

Die erste Beleuchtungssituation 101, wie in Fig. 5 dargestellt, weist einen Bildabschnitt mit erhöhter Helligkeit 250 und einen Bildabschnitt mit niedriger Helligkeit 260 auf. Der Bildabschnitt mit niedriger Helligkeit 260 kann beispielsweise durch einen Schatten hervorgerufen werden, der beispielsweise in den Beleuchtungsbereich 140 oder zwischen den Beleuchtungsbereich und den einzeln steuerbaren Lichtquellen 150-1, 150-2, 150-3, 150-4 fällt. Basierend auf der ersten Bildaufnahme 122 der ersten Beleuchtungssituation 101 kann der Erfasser die erste Helligkeitsinformation 132 bereitstellen. Die erste Helligkeitsinformation 132 kann beispielsweise eine Information über eine erhöhte Helligkeit in den unterschiedlichen Bildabschnitten 250, eine Information über eine niedrigere Helligkeit in den unterschiedlichen Bildabschnitten 260 und eine Information über eine gleichmäßige Helligkeit in den unterschiedlichen Bildabschnitten aufweisen, um die veränderte Einstellung 112 der einzeln steuerbaren Lichtquellen zu bestimmen.

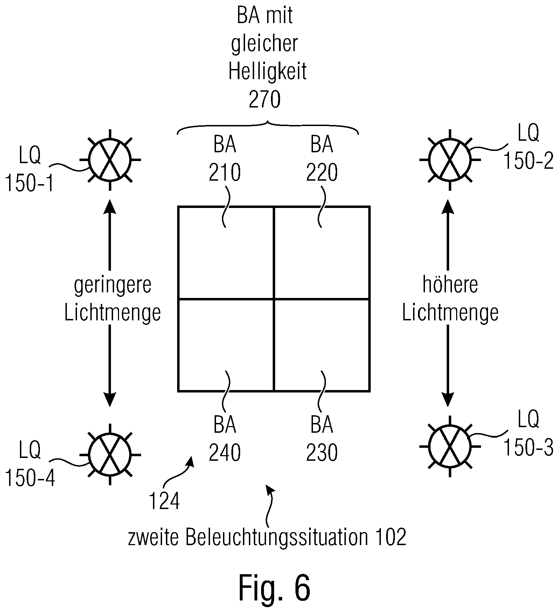

Fig. 6 zeigt eine schematische Darstellung einer zweiten Beleuchtungssituation gemäß einem Ausführungsbeispiel. Im Vergleich zu der ersten Beleuchtungssituation 101 in Fig. 5 ist die zweite Beleuchtungssituation 102 der Fig. 6 gleichmäßiger ausgeleuchtet bzw. homogen ausgeleuchtet. Indem alle Bildabschnitte 210 bis 240 die gleiche Helligkeit aufweisen, ist eine homogene Beleuchtung des Beleuchtungsbereichs erreicht. Wie bereits erwähnt kann die Steuerung 110 die Lichtquellen 150-1, 150-2, 150-3, 150-4 basierend auf der vom Erfasser 130 bereitgestellten ersten Beleuchtungssituation 101 bzw. ersten Helligkeitsinformation 132 einzeln separat so ansteuern, dass die Lichtmenge der Lichtquellen 150-1 und 150-4 eine geringere Lichtmenge aufweist, und die Lichtquellen 150-2 und 150-3 eine höhere Lichtmenge aufweisen, verglichen mit der ersten Beleuchtungssituation 101 der Fig. 5. Indem die Steuerung 110 die Lichtstärke aufgrund eines höheren Stroms oder einer längeren Leuchtdauer aufgrund der längeren Einschaltzeit einstellt, kann die unterschiedliche Lichtmenge für einen Bildabschnitt 210 bis 240 eingestellt werden. Dadurch kann die zweite Bildaufnahme 124 mit gleicher Helligkeit 270 aufgenommen werden.

Indem die Steuerung 110 ausgebildet ist, basierend auf der zusammengeführten ersten Helligkeitsinformation 132 der ersten Bildaufnahme 122 mit der Zuordnung 130-5 bzw. 134 die unterschiedlichen Lichtmengen der einzeln steuerbaren Lichtquellen anzupassen, kann die zweite Beleuchtungssituation 102 eine gleichmäßigere Helligkeit aufweisen als die erste Beleuchtungssituation 101.

Indem die Steuerung 110, basierend auf der Information über eine erhöhte Helligkeit in den unterschiedlichen Bildabschnitten 250, die Lichtmenge der einzeln steuerbaren Lichtquellen 150-1, 150-2, 150-3, 150-4 in der zweiten Beleuchtungssituation 102 in der Belichtungszeit verringert, können die unterschiedlichen Bildabschnitte mit der erhöhten Helligkeit 210 und 240 bei der zweiten Bildaufnahme 124 eine geringere Lichtmenge erhalten als bei der ersten Bildaufnahme 122. Indem die Steuerung 110, basierend auf der Information über eine niedrigere Helligkeit in den unterschiedlichen Bildabschnitten 260, die Lichtmenge der einzeln steuerbaren Lichtquellen 150-1, 150-2, 150-3, 150-4 in der zweiten Beleuchtungssituation 102 in der Belichtungszeit erhöht, können die unterschiedlichen Bildabschnitte mit der niedrigeren Helligkeit 220 und 230 bei der zweiten Bildaufnahme 124 eine höhere Lichtmenge erhalten als bei der ersten Bildaufnahme 122.

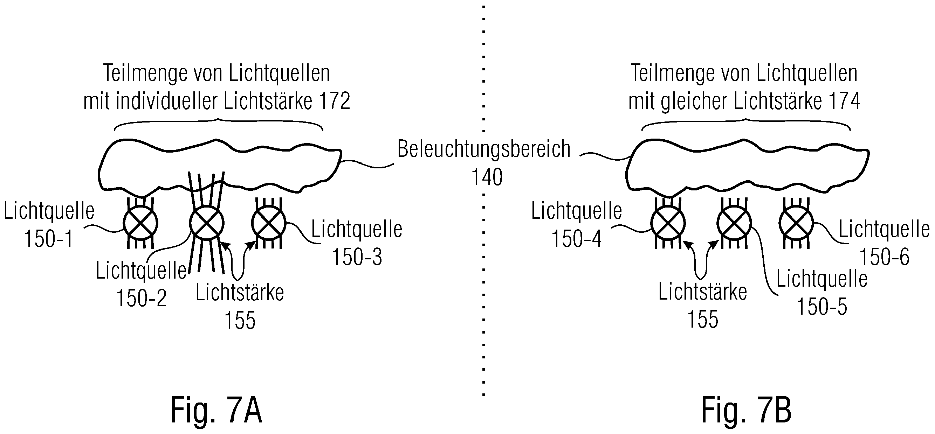

Fig. 7A zeigt eine schematische Darstellung von einzeln steuerbaren Lichtquellen gemäß einem Ausführungsbeispiel, die einen Beleuchtungsbereich 140 mit individueller Lichtstärke ausleuchten. In Fig. 7A sind beispielsweise drei Lichtquellen 150-1, 150-2 und 150-3 lateral benachbart angeordnet, um einen schematischen Beleuchtungsbereich 140 zu beleuchten, wobei die drei Lichtquellen einer Teilmenge von Lichtquellen mit individueller Lichtstärke 170 entsprechen. Beispielsweise ist die Lichtstärke 155 der Lichtquellen 150-1 und 150-3 geringer als die Lichtstärke der Lichtquelle 150-2. Innerhalb der Belichtungszeit kann der Beleuchtungsbereich 140 mit einer Lichtmenge beleuchtet werden.

Fig. 7B zeigt eine schematische Darstellung von einzeln steuerbaren Lichtquellen 150-4, 150-5, 150-6 gemäß einem Ausführungsbeispiel, die einen Beleuchtungsbereich 140 mit gleicher Lichtstärke 174 ausleuchten. Beispielsweise kann die Lichtmenge der Lichtquellen mit gleicher Lichtstärke 174 der Lichtmenge der Lichtquellen mit individueller Lichtstärke 172 aus Fig. 7A entsprechen. Zudem kann auch die Belichtungszeit der Lichtquellen mit individueller Lichtstärke 172 und der Lichtquellen mit gleicher Lichtstärke 174 entsprechend gleich sein. Je nach Beleuchtungssituation kann die Steuerung 110 ausgebildet sein, die Teilmenge von Lichtquellen so anzusteuern, dass sie mit individueller Lichtstärke 172 oder mit gleicher Lichtstärke 174 den Beleuchtungsbereich 140 beleuchtet. Darüber hinaus kann die Lichtmenge der Lichtquellen mit individueller Lichtstärke 172 sich von der Lichtmenge der Lichtquellen mit gleicher Lichtstärke 174 unterscheiden, so dass die Lichtmenge in Fig. 7A aufgrund der höheren Lichtstärke 155 der Lichtquelle 150-2 höher ist als die Lichtmenge der Lichtquellen in Fig. 7B.

Fig. 8 zeigt ein schematisches Diagramm von einzeln steuerbaren Lichtquellen 150-1, 150-2, 150-3 und einen Bildsensor 120 gemäß einem Ausführungsbeispiel. Die Lichtquellen 150-1, 150-2, 150-3 können beispielsweise unterschiedliche Lichtstärken und unterschiedliche Ausschaltzeitpunkte aufweisen. Beispielsweise ist die Steuerung 110 ausgebildet, die Lichtmenge der Lichtquellen basierend auf unterschiedliche Auszeitschaltpunkte der Lichtquellen 150-1, 150-2, 150-3 anzupassen. Dies entspricht beispielsweise einer Einstellung über die Zeit, in dem die eingeschaltete Zeit innerhalb der Belichtungszeit für jede Lichtquelle 150-1, 150-2, 150-3 unterschiedlich lang nach dem Einschaltzeitpunkt ist. Die Zeitdiagramme stellen den aus- bzw. eingeschalteten Zustand der Lichtquellen und des Bildsensors 120 bzw. Kameraverschluss dar. Dabei kann beispielsweise der Bildsensor von einem Start der Belichtungszeit bis zu einem Ende der Belichtungszeit den Beleuchtungsbereich aufnehmen. Über den Triggerimpuls 126 kann die Steuerung 120 die einzeln steuerbaren Lichtquellen 150-1, 150-2, 150-3 am Start der Belichtungszeit oder beispielsweise auch vor dem Start der Belichtungszeit einschalten. Wie bereits erwähnt kann die Steuerung 110 die einzeln steuerbaren Lichtquellen zu unterschiedlichen Zeitpunkten während der Belichtungszeit ansprechend auf die erste Beleuchtungssituation 101 ausschalten. Mit anderen Worten kann die Lichtquelle 150-1 eine geringere Lichtmenge abgeben als die Lichtquelle 150-2 innerhalb der Belichtungszeit. Darüber hinaus kann die Steuerung 110 die einzeln steuerbaren Lichtquellen 150-1, 150-2, 150-3 am oder vor dem Start der Belichtungszeit des Bildsensors 120 einschalten, ansprechend auf die erste Beleuchtungssituation 101 und so unterschiedliche Lichtmengen 160-1, 160-2 und 160-3 der einzeln steuerbaren Lichtquellen 150-1, 150-2 und 150-3 erzeugen. Es ist darauf hinzuweisen, dass die Steuerung 110 ausgebildet ist, während der Belichtungszeit oder nach dem Ende der Belichtungszeit oder gleichzeitig am Ende der Belichtungszeit die einzeln steuerbaren Lichtquellen 150-1, 150-2, 150-3 auszuschalten. Die Steuerung 110 kann den Einschaltzeitpunkt des zeitgleichen Einschaltens am Start bzw. Beginn oder in der Belichtungszeit wählen. Die Steuerung 110 kann die einzeln steuerbaren Lichtquellen 150-1, 150-2, 150-3 ausgeschaltet halten, beispielsweise vor dem zeitgleichen Einschalten der Belichtungszeit, um den Energiebedarf basierend auf der präzisen Ansteuerung zu minimieren und die Energieeffizienz der Aufnahmevorrichtung 100 zu erhöhen.

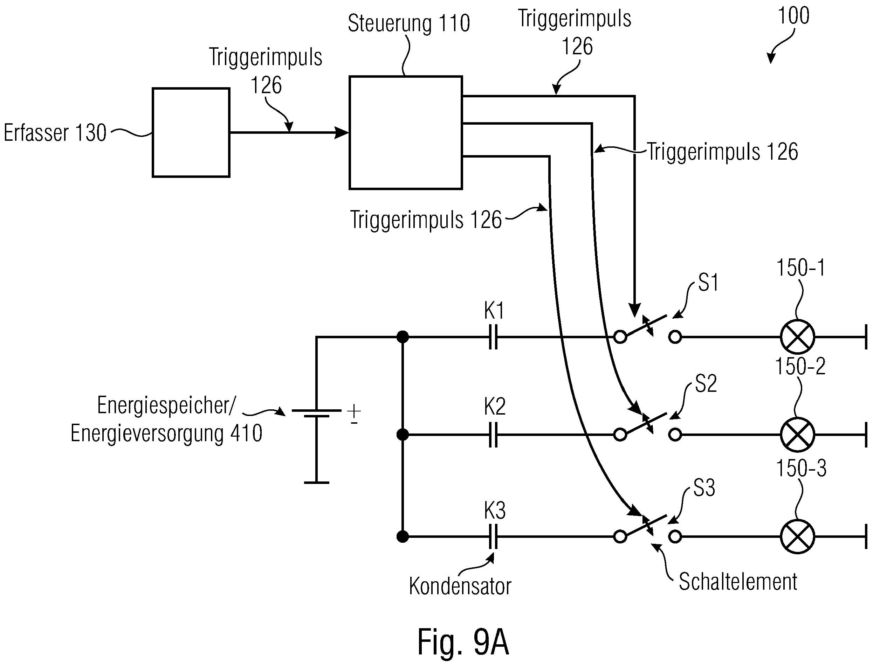

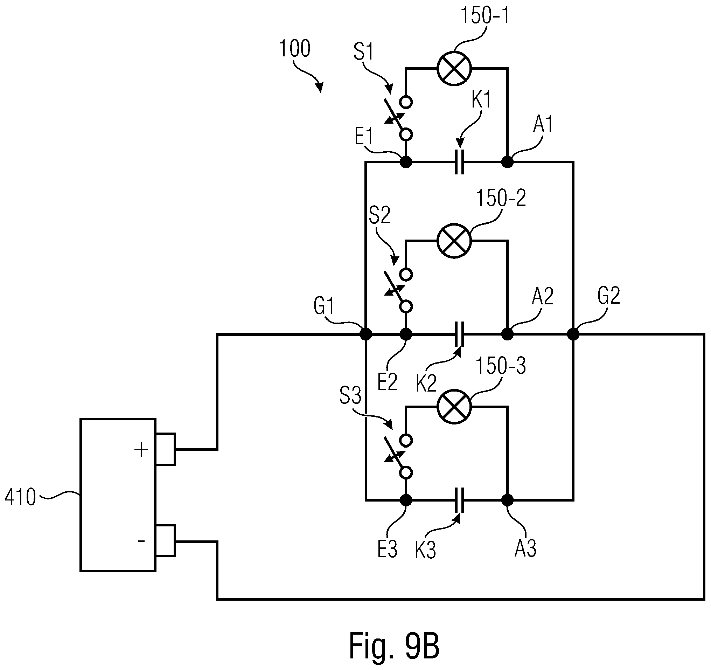

Fig. 9A zeigt ein schematisches Blockschaltbild der Aufnahmevorrichtung 100 gemäß einem Ausführungsbeispiel. Der Erfasser 130 kann beispielsweise einen Triggerimpuls 126 an die Steuerung 110 senden, der an die jeweiligen Schalter S1, S2, S3 der einzeln steuerbaren Lichtquellen 150-1, 150-2, 150-3 weitergesendet werden kann, so dass die Schaltelemente S1, S2 und S3 die elektrische Verbindung schließen bzw. öffnen und Strom von dem Energiespeicher, dem Energieversorger oder der Energieversorgung 410 an die einzeln steuerbaren Lichtquellen 150-1, 150-2, 150-3 fließen kann. Die Energieversorgung 410 kann beispielsweise eine Batterie oder eine andere Energiequelle umfassen, die alle elektronischen Bauelemente mit Energie versorgt. Das in Fig. 9 dargestellte Blockschaltbild umfasst die Energieversorgung 410, für jede Lichtquelle oder jede Teilmenge von Lichtquellen jeweils einen Kondensator K1, K2 und K3 und jeweils einen Schalter S1, S2 und S3. Die jeweiligen Kondensatoren K1, K2 und K3 und die jeweiligen Schalter S1, S2 und S3 und die jeweiligen Lichtquellen 150-1, 150-2, 150-3 sind zueinander parallel geschaltet und werden alle von der Energieversorgung 410 mit Energie versorgt. Ein Anschluss der jeweiligen Kondensatoren K1, K2, K3 für die jeweilige Lichtquelle 150-1, 150-2, 150-3 ist mit einem Anschluss des jeweiligen Schalters S1, S2, S3 für die jeweilige Lichtquelle verbunden. Ein anderer Anschluss des jeweiligen Kondensators K1, K2, K3 für die jeweilige Lichtquelle 150-1, 150-2, 150-3 ist mit der Energieversorgung 410 verbunden. Mit dieser schematischen Darstellung kann sich der Einschaltstrom auf eine Vielzahl von Kondensatoren und Schaltern verteilen, die jeweils nur einen sehr viel geringeren Strom schalten müssen.

Fig. 9B zeigt eine schematische Darstellung einer Schaltzeichnung der Aufnahmevorrichtung 100 gemäß einem Ausführungsbeispiel. Die Schaltzeichnung umfasst einen Energiespeicher 410 oder eine Energieversorgung 410, beispielsweise in Form einer Batterie, die drei Kondensatoren K1, K2 und K3 mit Strom versorgt. Die drei Kondensatoren K1-K3 sind zueinander parallel geschaltet, so dass die Anschlüsse E1, E2 und E3 mit dem Pluspol der Energieversorgung 410 über einen Knotenpunkt G1 verbunden sind, um einen Einschaltstrom für die kurze notwendige Zeit, der Belichtungszeit, bereitzustellen. Ferner sind die drei Kondensatoren K1-K3 so geschaltet, dass die Anschlüsse A1, A2 und A3 der Kondensatoren K1-K3 mit dem Minuspol der Energieversorgung 410 über den Knotenpunkt G2 verbunden sind, um die Parallelschaltung der Kondensatoren K1-K3 im Stromkreis zu komplettieren.

An jeden der Kondensatoren K1-K3 ist eine Reihenschaltung geschalten, bestehend aus einem Schaltelement S1 und einer einzeln steuerbaren Lichtquelle 150-1, so dass jeder Kondensator K1-K3 eine einzeln steuerbare Lichtquelle 150-1, 150-2, 150-3 dezentral mit Energie versorgen kann. Das Schaltelement S1 kann zwischen den Anschluss E1 und der einzeln steuerbaren Lichtquelle 150-1 geschalten sein, so dass sich das Schaltelement S1 basierend auf einem Triggerimpuls 126 der Steuerung 110 (siehe Fig. 9) öffnet und schließt bzw. zwischen einem leitenden Zustand und einem nichtleitenden Zustand hin- und herwechseln kann. Analog dazu können die Schaltelemente S2 und S3 zwischen den jeweiligen Anschlüssen E2 und E3 und den jeweiligen einzelnen steuerbaren Lichtquellen 150-2 und 150-3 geschalten sein, so dass sich der geschaltete Strom über den Knotenpunkt G1 auf die Parallelschaltung der Kondensatoren K1-K3 verteilen kann.

Beispielsweise können die Schaltelemente S1-S3 zum Unterbrechen oder Schließen des Stromkreises Schalter, Relais oder Transistoren umfassen. Der Anschluss A1 ist beispielsweise mit dem Minuspol des Kondensators K1 verbunden, so dass die einzeln steuerbare Lichtquelle 150-1 zwischen dem Anschluss A1 und dem Schaltelement S1 verbunden ist, um die Reichenschaltung mit der Parallelschaltung zu verbinden. Die Anschlüsse E1, E2, E3 der parallel geschalteten Kondensatoren K1-K3 sind mit dem Knotenpunkt G1 verbunden und die Anschlüsse A1, A2 und A3 sind mit dem Knotenpunkt G2 verbunden, um einen Stromkreis breitzustellen, so dass jeder Kondensator eine eigene einzeln steuerbare Lichtquelle basierend auf dem Triggerimpuls 126 der Steuerung 100 ansteuern kann. Somit kann der Einschaltstrom auf viele, einzelne Schaltkomponenten verteilt werden, die jeweils nur einen sehr viel geringeren Strom schalten müssen, verglichen mit einem zentralen Schalter, der beispielsweise zwischen dem Pluspol der Energieversorgung 410 und dem Knotenpunkt G1 geschaltet ist. Vorzugsweise sind die Kondensatoren in direkter Nähe der einzeln steuerbaren Lichtquelle angeordnet, so dass die Zuleitung zwischen den Kondensatoren und den Lichtquellen kurz oder minimal gehalten werden kann. Auf diese Weise kann ein reduzierter Spannungsabfall erzielt werden.

Alternativ oder zusätzlich kann der Schaltkreis der Aufnahmevorrichtung 100 einen, zwei, drei, oder auch eine Vielzahl von parallel geschalteten Kondensatoren aufweisen. Alternativ oder zusätzlich kann beispielsweise ein Kondensator eine Vielzahl von Einzelkondensatoren, also eine Gruppe von parallel geschalteten Kondensatoren, umfassen, um den geschalteten Strom auf weitere viele, kleine Schaltelemente zu verteilen, die, um den Einschaltstrom bereitstellen zu können, eine divergente Entladezeit zueinander aufweisen können, so dass beispielsweise ein erster Einzelkondensator vollständig entladen sein kann, während ein zweiter Einzelkondensator der Gruppe von Kondensatoren in der Belichtungszeit (noch) nicht vollständig entladen ist. Die Aufnahmevorrichtung 100 kann beispielsweise eine Ladezeit bereitstellen, die verglichen mit der Entladungszeit der Kondensatoren zeitlich länger sein kann. Mit anderen Worten können sich die Kondensatoren K1-K3 langsam wieder aufladen. Langsam entspricht beispielsweise ein Aufladen mit signifikant geringerem Strom im Bereich von einigen Milliampere, verglichen mit dem Einschaltstrom von einigen 100 Ampere und somit einem geringerem Spannungsabfall. Mittels einer asynchronen Ansteuerung der Schaltelemente S1-S3 kann beispielsweise der Kondensator K1 eine größere Entladung und dadurch eine längere Belichtungszeit aufweisen, oder eine größere Lichtmenge abgeben, als die Kondensatoren K2 oder K3, die eine kleinere Entladung und dadurch eine kürzere Belichtungszeit aufweisen, oder eine geringere Lichtmenge abgeben, um eine homogene Ausleuchtung der Szene zu erhalten. Anders ausgedrückt können dunkle Bildbereiche aufgehellt werden, ohne bereits helle Bildbereiche zu überstrahlen.

Alternativ oder zusätzlich umfasst die einzeln steuerbare Lichtquelle 150-1 beispielsweise mehrere oder eine Vielzahl von einzeln steuerbaren Lichtquellelementen, die beispielsweise als Lichtelementgruppe von dem Schaltelement S1 geschaltet werden können.

Zusammengefasst ermöglicht die Schaltzeichnung der Aufnahmevorrichtung 100 ein energiearmes Schalten bei hohen Einschaltströmen im Bereich von 100 Ampere, ohne dass ein erhebliches Abfallen der Spannung beim Einschalten der Beleuchtung verursacht wird.

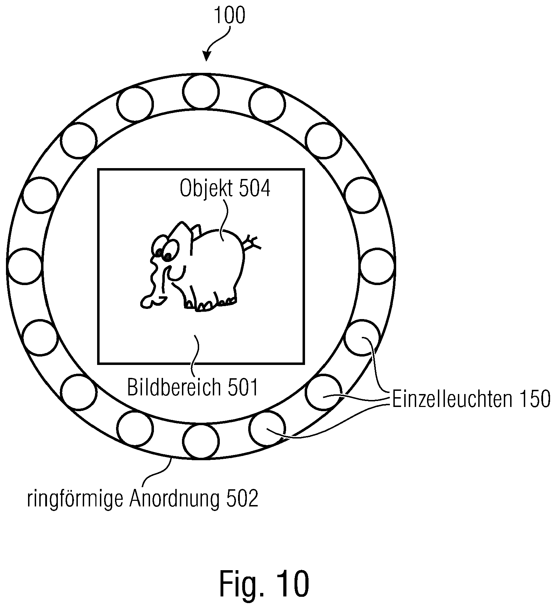

Fig. 10 zeigt eine schematische Darstellung einer Aufnahmevorrichtung 100 gemäß einem Ausführungsbeispiel, bei der die einzeln steuerbaren Lichtquellen 150 ringförmig 502 um einen Beleuchtungsbereich bzw. Bildbereich 501 angeordnet sind. Die Einzelleuchten 150 entsprechen den einzeln steuerbaren Lichtquellen 150-1, 150-2, 150-3, 150-4, 150-5, 150-6 und können beispielsweise quadratisch, oval oder rechteckig oder in einer anderen beliebigen geschlossenen polygonartigen Form angeordnet sein bzw. umfassen. Die Einzelleuchten 150 sind beispielsweise mit dem Erfasser 130, der Steuerung 110 und dem Bildsensor 120, die nicht dargestellt sind, elektrisch verbunden, so dass die Einzelleuchten 150 den Bildbereich 501 und das Objekt 504 innerhalb des Bildbereichs 501 ausleuchten. Der Bildbereich 501 kann die gleiche Form wie der Beleuchtungsbereich 140 aus Fig. 1 aufweisen und beispielsweise eine ringförmige, ovale, rechteckige oder quadratische oder eine beliebige Form eines geschlossenen Polygonzuges annehmen.

Bei Anwendungsbeispielen kann der Bildbereich 501 größer oder gleich dem Beleuchtungsbereich 104 sein, der durch die Einzelleuchten 150 beleuchtet wird.

Bei Anwendungsbeispielen kann der Bildbereich 501 kleiner oder gleich dem Beleuchtungsbereich 104 sein, der durch die Einzelleuchten 150 beleuchtet wird.

Darüber hinaus ist es möglich, einen Teil des Objekts 504 zu beleuchten bzw. innerhalb des Bildbereichs 501 zu erfassen, indem man beispielsweise eine Zoomfunktion der Kamera verwendet oder die ganze Aufnahmevorrichtung 100 näher zu dem Objekt 504 hinbewegt.

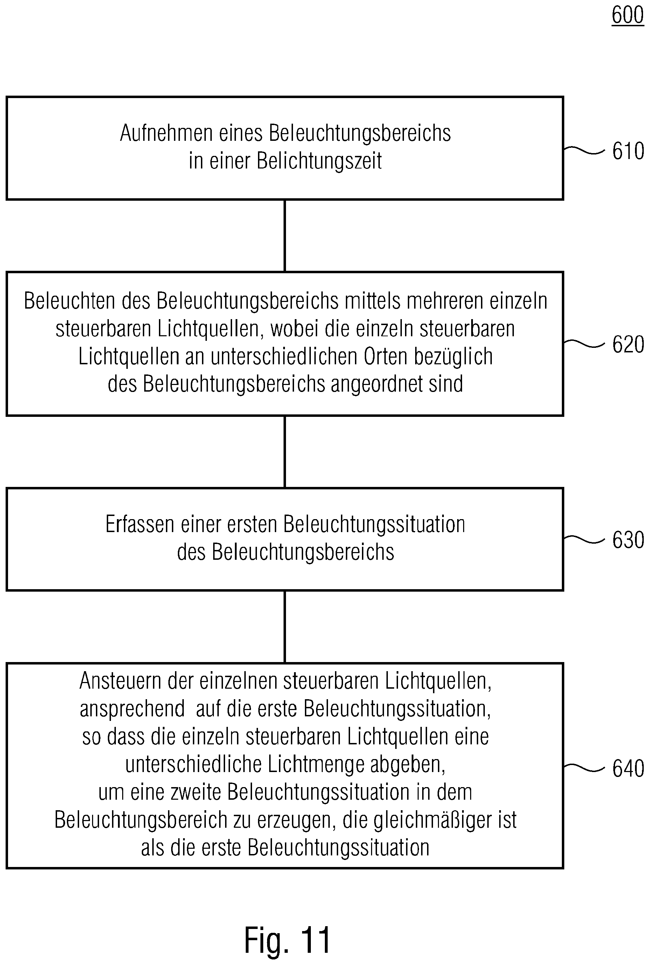

Fig. 11 zeigt ein Verfahren 600 zum Bereitstellen einer Aufnahmevorrichtung. Das Verfahren 600 umfasst ein Aufnehmen 610 eines Beleuchtungsbereichs in einer Belichtungszeit, ein Beleuchten 620 des Beleuchtungsbereichs mittels mehreren einzeln steuerbaren Lichtquellen, wobei die einzeln steuerbaren Lichtquellen an unterschiedlichen Orten bezüglich des Beleuchtungsbereichs angeordnet sind, ein Erfassen 630 einer ersten Beleuchtungssituation des Beleuchtungsbereichs, und ein Ansteuern 640 der einzelnen steuerbaren Lichtquellen, ansprechend auf die erste Beleuchtungssituation, so dass die einzeln steuerbaren Lichtquellen eine unterschiedliche Lichtmenge abgeben, um eine zweite Beleuchtungssituation in dem Beleuchtungsbereich zu erzeugen, die gleichmäßiger ist als die erste Beleuchtungssituation.

Das Verfahren 600 kann optional um alle hierin beschriebenen Merkmale, Funktionalitäten und Details ergänzt werden, auch wenn diese im Hinblick auf Vorrichtungen beschrieben wurden. Das Verfahren kann um diese Merkmale, Funktionalitäten und Details sowohl einzeln als auch in Kombination ergänzt werden.

Zusammenfassend ist festzuhalten, dass Ausführungsbeispiele gemäß der vorliegenden Erfindung eine Aufnahmevorrichtung und ein Verfahren schaffen, die einen Beleuchtungsbereich auf Basis von Helligkeitsinformationen von vorhergehenden Bildaufnahmen homogen ausleuchten. Basierend auf der ersten Helligkeitsinformation und den zugeordneten Lichtquellen mit den jeweiligen Bildabschnitten kann mit minimalem Aufwand eine energieeffiziente Ausleuchtung eines Beleuchtungsbereichs bei Dunkelheit als auch bei gegebenen Lichtverhältnissen bereitgestellt werden, um eine gleichmäßige Helligkeit eines Beleuchtungsbereichs zu erzeugen.

Im Folgenden werden einige Aspekte der vorliegenden Erfindung beschrieben, die einzeln oder in Kombination in Ausführungsbeispielen angewendet werden können.

Um eine Szene auszuleuchten, werden üblicherweise eine oder mehrere Beleuchtungen ("Lampen") so angeordnet, dass sie zusätzlich zu ggf. bereits vorhandenem Licht (z.B. Sonnenlicht) wirken.

Um dabei z.B. beim Einsatz auf dem Feld auch bei Nacht eine Helligkeit vergleichbar mit der Sonne zu erreichen, sind erhebliche Energiemengen notwendig.

Daher ist es zweckmäßig, dass die Beleuchtung nur dann eingeschaltet wird ("Blitzen"), wenn die Kamera lichtempfindlich ist (z.B. Verschluss geöffnet). Aus diesem Grund wird bei der Erfindung die Beleuchtung mit dem Verschluss der Kamera ("Trigger") so verbunden, dass die Beleuchtungen synchron mit dem Triggerimpuls der Kamera(s) eingeschaltet werden.

In der konkreten Anwendung werden die Beleuchtungen zweckmäßigerweise um die Kamera herum angeordnet ("Ringblitz"), z. B. in Form von LED-basierten Linearleuchten (linear angeordnete Kette von LEDs). Um z. B. eine seitliche Einstrahlung der Sonne tagsüber zu kompensieren, ist es sinnvoll, jede der Lampen unterschiedlich hell zu steuern. Dies geschieht derart, dass für jede Lampe eine eigene "Beleuchtungszeit" im µs-Bereich angegeben werden kann. Das bedeutet, dass alle Lampen gleichzeitig eingeschaltet, aber je nach Bedarf nach unterschiedlicher Zeit abgeschaltet werden. So kann unterschiedlichen Bereichen der Szene bedarfsgerecht Licht zugeführt werden. Zur Energieersparnis ist es nicht sinnvoll (wenn auch möglich) die Beleuchtung mit Spannung zu versorgen, wenn die Belichtungszeit der Kamera beendet ist.

Durch die variable Steuerung unterschiedlicher Bereiche jeder der LED-Lampen - im Extremfall lässt sich jede LED separat zeitlich ansteuern - kann eine homogenere Ausleuchtung der Szene erreicht werden. Dies ist für die nachfolgende Bildverarbeitung, z. B. unter Verwendung von KI-Methoden, extrem vorteilhaft. Dann andernfalls müsste eine KI neben der eigentlichen Klassifikationsaufgabe auch sämtliche Beleuchtungsvariationen mitlernen, was die Anzahl der notwendigen Lernstichproben exponentiell wachsen lassen würde.

Neben der Verwendung von einfarbigen (i.d.R. weißen) LEDs werden simultan auch IR-Beleuchtungen verwendet, da die verwendeten Kameras sowohl eine Farb- als auch eine Infrarotaufnahme der Szene erzeugen. Aber es ist auch die Verwendung anderer Farben denkbar.

Die Ansteuerung möglichst feingranularer LED-Segmente bietet einen weiteren Vorteil: der Einschaltstrom kann mehrere 100 Ampere betragen, was technisch ein signifikantes Problem darstellt. Um den Einschaltstrom bereitzustellen, werden daher üblicherweise Kondensatoren verwendet, die diesen Strom für die kurze notwendige Zeit bereitstellen können. Über die Zuleitungen zu den LED-Lampen tritt bei diesen hohen Strömen jedoch durch den Leitungswiderstand ein erheblicher Spannungsabfall ein, der einen Energieverlust bedeutet. Werden aber feingranulare LED-Segmente angesteuert, kann dieser Pufferkondensator in direkter Nähe der LEDs platziert werden, was die Energieverluste minimiert. Da ein zentraler elektronischer Schalter entfällt, verteilt sich der geschaltete Strom auf viele, kleine Schaltelemente, die jeweils nur einen sehr viel geringeren Strom schalten müssen.

Eine derartige Beleuchtung, die dutzende, wenn nicht hunderte Einstellmöglichkeiten für die Beleuchtungszeiten der einzelnen Elemente bietet, ist nicht einfach einzustellen, da szenenabhängig je nach aufgenommenen Objekten und Lichtverhältnissen diese Beleuchtungszeiten ständig angepasst werden müssen.

Daher wird aufgrund des jeweils zuletzt aufgenommenen Bildes das Beleuchtungsergebnis für unterschiedliche Bildabschnitte (z. B. Kacheln) bewertet und diese Bewertung als Grundlage für die Änderung der Beleuchtungsparameter des Folgebildes verwendet. Da typischerweise mehrere Bilder pro Sekunde aufgenommen werden, sie die Lichtverhältnisse jedoch meist sehr viel langsamer ändern, ist diese Vorgehensweise möglich. Die so gewonnenen Parametervektoren können bei Bedarf z. B. tiefpassgefiltert werden, um Schwingungen oder schnelle Änderungen zu vermeiden.

In der Realität werden mehrere dieser Kamera/Beleuchtungseinheiten nebeneinander angebracht, so dass durchaus Licht der benachbarten LED-Lampe(n) das Bild einer Kamera beeinflussen kann, was ebenfalls in die Vorberechnung der Beleuchtungsparameter des nächsten Bildes einfließen muss.

Gemäß einem weiteren Ausführungsbeispiel umfasst die Aufnahmevorrichtung einen Bildsensor (120) zum Aufnehmen eines Beleuchtungsbereichs (140) in einer Belichtungszeit, mehrere einzeln steuerbare Lichtquellen (150-1,150-2,150-3,150-4; 150-5; 150-6) zum Beleuchten des Beleuchtungsbereichs (140), wobei die einzeln steuerbaren Lichtquellen (150-1,150-2,150-3,150-4;150-5;150-6) an unterschiedlichen Orten bezüglich des Beleuchtungsbereichs (140) angeordnet sind, einen Erfasser (130) zum Erfassen einer ersten Beleuchtungssituation (101) des Beleuchtungsbereichs (140), und eine Steuerung (110) zum Ansteuern der einzeln steuerbaren Lichtquellen (150-1,150-2,150-3,150-4;150-5;150-6), ansprechend auf die erste Beleuchtungssituation (101), so dass die einzeln steuerbaren Lichtquellen (150-1,150-2,150-3,150-4;150-5;,150-6) eine unterschiedliche Lichtmenge abgeben, um eine zweite Beleuchtungssituation (102) in dem Beleuchtungsbereich (140) zu erzeugen, die gleichmäßiger ist als die erste Beleuchtungssituation (101).

Gemäß einem weiteren Ausführungsbeispiel ist die Steuerung (110) ausgebildet, um die einzelnen steuerbaren Lichtquellen (150-1,150-2,150-3,150-4;150-5;150-6) ansprechend auf die erste Beleuchtungssituation (101) anzusteuern, so dass die einzeln steuerbaren Lichtquellen (150-1,150-2,150-3,150-4;150-5;150-6) in der Belichtungszeit die unterschiedliche Lichtmenge abgeben.

Gemäß einem weiteren Ausführungsbeispiel ist der Bildsensor (120) ausgebildet, um eine erste Bildaufnahme (122) aufzunehmen, und wobei der Erfasser (130) ausgebildet ist, um die erste Beleuchtungssituation (101) des Beleuchtungsbereichs (140) aus der ersten Bildaufnahme zu erfassen.

Gemäß einem weiteren Ausführungsbeispiel ist der Bildsensor (120) ausgebildet, um eine zweite Bildaufnahme (124) mit der zweiten Beleuchtungssituation (102) aufzunehmen.

Gemäß einem weiteren Ausführungsbeispiel ist der Erfasser (130) ausgebildet, um eine erste Helligkeitsinformation (132) der ersten Bildaufnahme (122) zu bestimmen, und wobei die Steuerung (110) ausgebildet ist, um eine veränderte Einstellung (112) der einzeln steuerbaren Lichtquellen (150-1,150-2,150-3,150-4;150-5;150-6) in Abhängigkeit von der ersten Helligkeitsinformation (132) zu bestimmen.

Gemäß einem weiteren Ausführungsbeispiel ist der Erfasser (130) ausgebildet, um die erste Bildaufnahme (122) in unterschiedliche Bildabschnitte (122-1;210,220,230,240) aufzuteilen, um die erste Helligkeitsinformation (132) der ersten Bildaufnahme (122) bereitzustellen, und wobei die Steuerung (110) ausgebildet ist, um die erste Helligkeitsinformation (132) der ersten Bildaufnahme (122) von den unterschiedlichen Orten der an unterschiedlichen Orten bezüglich des Beleuchtungsbereichs (140) angeordneten einzeln steuerbaren Lichtquellen (150-1,150-2,150-3,150-4;150-5;150-6) mit der unterschiedlichen Lichtmenge der an unterschiedlichen Orten bezüglich des Beleuchtungsbereichs (140) angeordneten einzeln steuerbaren Lichtquellen (150-1,150-2,150-3,150-4;150-5;150-6) zu verknüpfen, um die veränderte Einstellung (112) der einzeln steuerbaren Lichtquellen (150-1,150-2,150-3,150-4;150-5;150-6) bereitzustellen.

Gemäß einem weiteren Ausführungsbeispiel ist der Erfasser (130) ausgebildet, um die erste Helligkeitsinformation (132) der ersten Bildaufnahme (122) unter Verwendung einer Bildaufnahmeuntersuchung der ersten Bildaufnahme (122) zu bestimmen.

Gemäß einem weiteren Ausführungsbeispiel ist der Erfasser (130) ausgebildet, um unter Verwendung der Bildaufnahmeuntersuchung eine mittlere Helligkeit (122-2) der ersten Bildaufnahme und eine jeweilige Helligkeit (122-3) der unterschiedlichen Bildabschnitte (122-1;210,220,230,240) zu bestimmen.

Gemäß einem weiteren Ausführungsbeispiel ist der Erfasser (130) ausgebildet, um die jeweilige Helligkeit (122-3) der unterschiedlichen Bildabschnitte mit der mittleren Helligkeit (122-2) der ersten Bildaufnahme für die unterschiedlichen Bildabschnitte (122-1;210,220,230,240) zu vergleichen (130-4), um die erste Helligkeitsinformation (132) der ersten Bildaufnahmen (122) zu bestimmen.

Gemäß einem weiteren Ausführungsbeispiel weist die vom Erfasser (130) bereitgestellte erste Helligkeitsinformation (132) der ersten Bildaufnahme eine Information über eine erhöhte Helligkeit in den unterschiedlichen Bildabschnitten, eine Informationen über eine niedrigere Helligkeit in den unterschiedlichen Bildabschnitten und eine Informationen über eine gleichmäßige Helligkeit in den unterschiedlichen Bildabschnitten auf, um die veränderte Einstellung (112) der einzeln steuerbaren Lichtquellen (150-1,150-2,150-3,150-4;150-5;150-6) basierend auf der von dem Erfasser (130) bereitgestellten ersten Helligkeitsinformation der ersten Bildaufnahme mittels der Steuerung (110) zu bestimmen.

Gemäß einem weiteren Ausführungsbeispiel ist der Erfasser (130) ausgebildet, um eine Zuordnung (130-5) zwischen den unterschiedlichen Orten der an unterschiedlichen Orten angeordneten einzeln steuerbaren Lichtquellen (150-1,150-2,150-3,150-4; 150-5; 150-6) und den unterschiedlichen Bildabschnitten (122-1;210,220,230,240) der ersten Bildaufnahme zu bestimmen, wobei die Information der erhöhten Helligkeit, die Information der niedrigeren Helligkeit oder die Information der gleichmäßigen Helligkeit in den unterschiedlichen Bildabschnitten mit den unterschiedlichen Orten der an unterschiedlichen Orten angeordneten einzeln steuerbaren Lichtquellen (150-1,150-2,150-3,150-4;150-5;150-6) bezüglich des Beleuchtungsbereichs (140) zugeordnet sind.

Gemäß einem weiteren Ausführungsbeispiel ist die Steuerung (110) ausgebildet, um eine veränderte Einstellung (112) der einzeln steuerbaren Lichtquellen (150-1,150-2,150-3,150-4;150-5;150-6) basierend auf der durch den Erfasser (130) bestimmten ersten Helligkeitsinformation (132) der ersten Bildaufnahme (122) und einer Zuordnung (130-5) zwischen den unterschiedlichen Orten der an unterschiedlichen Orten angeordneten einzeln steuerbaren Lichtquellen (150-1,150-2,150-3,150-4;150-5;150-6) und unterschiedlichen Bildabschnitten (122-1;210,220,230,240) der ersten Bildaufnahme einzustellen, um die erste Helligkeitsinformation (132) der ersten Bildaufnahme mit der Zuordnung zusammenzuführen.

Gemäß einem weiteren Ausführungsbeispiel ist die Steuerung (110) ausgebildet, um basierend auf der zusammengeführten ersten Helligkeitsinformation (134) der ersten Bildaufnahme mit der Zuordnung (130-5) die unterschiedlichen Lichtmengen der einzeln steuerbaren Lichtquellen (150-1,150-2,150-3,150-4;150-5;150-6) anzupassen, wobei die Steuerung (110) ausgebildet ist, um basierend auf der Information über die erhöhte Helligkeit in den unterschiedlichen Bildabschnitten die unterschiedliche Lichtmenge der einzeln steuerbaren Lichtquellen (150-1,150-2,150-3,150-4;150-5;150-6) in der zweiten Beleuchtungssituation (102) in der Belichtungszeit zu verringern, so dass die unterschiedlichen Bildabschnitte (122-1;210,220,230,240) mit der erhöhten Helligkeit bei der zweiten Bildaufnahme (124) eine geringere Lichtmenge erhalten als bei der ersten Bildaufnahme (122), oder wobei die Steuerung (110) ausgebildet ist, um basierend auf der Information über die niedrigere Helligkeit in den unterschiedlichen Bildabschnitten die unterschiedliche Lichtmenge der einzeln steuerbaren Lichtquellen (150-1,150-2,150-3,150-4;150-5;150-6) in der zweiten Beleuchtungssituation (102) in der Belichtungszeit zu erhöhen, so dass die unterschiedlichen Bildabschnitte (122-1;210,220,230,240) mit der niedrigeren Helligkeit bei der zweiten Bildaufnahme (124) eine höhere Lichtmenge erhalten als bei der ersten Bildaufnahme (122).

Gemäß einem weiteren Ausführungsbeispiel ist die Steuerung (110) ausgebildet, um eine veränderte Einstellung (112) der einzeln steuerbaren Lichtquellen (150-1,150-2,150-3,150-4;150-5;150-6) basierend auf unterschiedlichen Ausschaltzeitpunkten der einzeln steuerbaren Lichtquellen (150-1,150-2,150-3,150-4;150-5;150-6) in der Belichtungszeit anzupassen, wobei die einzeln steuerbaren Lichtquellen (150-1,150-2,150-3,150-4;150-5;150-6) in der Belichtungszeit unterschiedliche Ausschaltzeitpunkte aufweisen.

Gemäß einem weiteren Ausführungsbeispiel ist die Steuerung (110) ausgebildet, um eine veränderte Einstellung (112) der einzeln steuerbaren Lichtquellen (150-1,150-2,150-3,150-4;150-5;150-6) basierend auf unterschiedlichen Lichtstärken der einzeln steuerbaren Lichtquellen (150-1,150-2,150-,3,150-4;150-5;150-6) in der Belichtungszeit anzupassen, wobei die einzeln steuerbaren Lichtquellen (150-1,150-2,150-3,150-4;150-5;150-6) in der Belichtungszeit unterschiedliche Lichtstärken aufweisen.

Gemäß einem weiteren Ausführungsbeispiel ist die Steuerung (110) ausgebildet, um eine Teilmenge der einzeln steuerbaren Lichtquellen (150-1,150-2,150-3,150-4;150-5;150-6) mit einer gleichen Lichtstärke und einer anderen Teilmenge der einzeln steuerbaren Lichtquellen (150-1,150-2,150-3,150-4;150-5;150-6) mit einer individuellen Lichtstärke in der Belichtungszeit basierend auf der ersten Helligkeitsinformation der ersten Bildaufnahme einzustellen.

Gemäß einem weiteren Ausführungsbeispiel ist die Steuerung (110) ausgebildet, um die unterschiedliche Lichtmenge der einzelnen steuerbaren Lichtquellen (150-1,150-2,150-3,150-4;150-5;150-6) in einem ersten Wellenlängenbereich und einem zweiten Wellenlängenbereich einzustellen, wobei der Bildsensor (120) ausgebildet ist, um die Bildaufnahmen in dem ersten Wellenlängenbereich und in dem zweiten Wellenlängenbereich aufzunehmen, und wobei der Erfasser (130) ausgebildet ist, um die erste Beleuchtungssituation (101) des Beleuchtungsbereichs (140) aus der ersten Bildaufnahme (122) in dem ersten Wellenlängenbereich oder in dem zweiten Wellenlängenbereich zu erfassen.

Gemäß einem weiteren Ausführungsbeispiel ist der Bildsensor (120) ausgebildet, um den Beleuchtungsbereich (140) von einem Start der Belichtungszeit bis zu einem Ende der Belichtungszeit aufzunehmen, und die Steuerung (110) ist ausgebildet, um die einzeln steuerbaren Lichtquellen (150-1,150-2,150-3,150-4; 150-5; 150-6) so anzusteuern, dass die einzeln steuerbaren Lichtquellen (150-1,150-2,150-3,150-4;150-5;150-6) am oder vor dem Start der Belichtungszeit eingeschaltet werden und zu unterschiedlichen Zeitpunkten während der Belichtungszeit ansprechend auf die erste Beleuchtungssituation (101) ausgeschaltetwerden.

Gemäß einem weiteren Ausführungsbeispiel ist der Bildsensor (120) ausgebildet, um den Beleuchtungsbereich (140) von einem Start der Belichtungszeit bis zu einem Ende der Belichtungszeit aufzunehmen, und die Steuerung (110) ist ausgebildet, um die einzeln steuerbaren Lichtquellen (150-1,150-2,150-3,150-4;150-5;150-6) so anzusteuern, dass die einzeln steuerbaren Lichtquellen (150-1,150-2,150-3,150-4;150-5;150-6) am oder vor dem Start der Belichtungszeit eingeschaltet werden, ansprechend auf die erste Beleuchtungssituation (101) unterschiedliche Lichtmengen erzeugen, und zu unterschiedlichen Zeitpunkten während der Belichtungszeit oder nach dem Ende der Belichtungszeit oder gleichzeitig am Ende der Belichtungszeit ausgeschaltet werden.

Gemäß einem weiteren Ausführungsbeispiel ist der Bildsensor (120) ausgebildet, um den Beleuchtungsbereich (140) innerhalb eines geschlossenen Polygonzuges aufzunehmen, und wobei der Erfasser (130) ausgebildet ist, um die erste Beleuchtungssituation (101) sowohl bei Nacht als auch am Tag zu erfassen, wobei die Lichtmenge der einzeln steuerbaren Lichtquellen (150-1,150-2,150-3,150-4;150-5;150-6) bei Nacht höher ist als die Lichtmenge bei Tag.

Gemäß einem weiteren Ausführungsbeispiel umfasst die Aufnahmevorrichtung ferner einen Verschluss, wobei der Verschluss zwischen dem Bildsensor (120) und dem Beleuchtungsbereich (140) angeordnet ist, um den Bildsensor (120) in Abhängigkeit von der Belichtungszeit der unterschiedlichen Lichtmenge des Beleuchtungsbereichs (140) auszusetzen, wobei die Belichtungszeit einer durch die Steuerung (110) eingestellten Zeitspanne entspricht, in der der Verschluss geöffnet ist.

Gemäß einem weiteren Ausführungsbeispiel umfasst die Aufnahmevorrichtung eine Energieversorgung (410) und ein Substrat, auf dem die einzeln steuerbaren Lichtquellen (150-1,150-2,150-3,150-4; 150-5; 150-6) angeordnet sind, wobei das Substrat für jede Lichtquelle (150-1,150-2,150-3,150-4;150-5;150-6) oder jedeTeilmenge von Lichtquellen, die eine kleinere Anzahl von Lichtquellen als eine Gesamtanzahl der Lichtquellen umfasst, jeweils einen Kondensator (K1,K2,K3) und jeweils einen Schalter (S1,S2,S3) aufweist, wobei ein Anschluss des jeweiligen Kondensators (K1,K2,K3) für die jeweilige Lichtquelle (150-1,150-2,150-3,150-4; 150-5; 150-6) oder die jeweilige Teilmenge von Lichtquellen mit einem Anschluss des jeweiligen Schalters (S1,S2,S3) für die jeweilige Lichtquelle (150-1,150-2,150-3,150-4; 150-5;150-6) oder die jeweilige Teilmenge von Lichtquellen verbunden ist und ein anderer Anschluss des jeweiligen Kondensators (K1,K2,K3) für die jeweilige Lichtquelle (150-1,150-2,150-3,150-4;150-5;150-6) oder die jeweilige Teilmenge von Lichtquellen mit der Energieversorgung (410) verbunden ist, wobei die jeweiligen Kondensatoren (K1,K2,K3) und die jeweiligen Schalter (S1,S2,S3) und die jeweiligen Lichtquellen (150-1,150-2,150-3,150-4;150-5;150-6) oder die jeweiligen Teilmenge von Lichtquellen zueinander parallel geschaltet sind und alle von der Energieversorgung (410) mit Energie versorgt werden, und wobei die jeweiligen Schalter (S1,S2,S3) durch die Steuerung (110) steuerbar sind.

Gemäß einem weiteren Ausführungsbeispiel ist die Steuerung (110) ausgebildet, um die Belichtungszeit für den Bildsensor (120) zeitgleich mit einem Einschaltzeitpunkt der jeweiligen Schalter der jeweiligen Lichtquelle einzuschalten, um den Beleuchtungsbereich (140) in der Belichtungszeit zeitgleich mit dem Einschaltzeitpunkt der einzelnen steuerbaren Lichtquellen (150-1,150-2,150-3,150-4; 150-5; 150-6) ansprechend auf die erste Beleuchtungssituation (101) zu beleuchten, wobei die Steuerung (110) ausgebildet ist, um vor dem zeitgleichen Einschalten der Belichtungszeit und dem Einschaltzeitpunkt der einzeln steuerbaren Lichtquellen (150-1,150-2,150-3,150-4;150-5; 150-6) die einzeln steuerbaren Lichtquellen (150-1,150-2,150-3,150-4;150-5;150-6) ausgeschaltet zu halten, und wobei die Steuerung (110) ausgebildet ist, um den Einschaltzeitpunkt des zeitgleichen Einschaltens am Beginn oder in der Belichtungszeit zu wählen.

Gemäß einem weiteren Ausführungsbeispiel ist der Erfasser (130) ausgebildet, um eine erste Bildaufnahme (122) in unterschiedliche Bildabschnitte (122-1;210,220,230,240) zu segmentieren, um eine mittlere Helligkeit (122-2) der ersten Bildaufnahmen (122) zu bestimmen, um eine jeweilige Helligkeit (122-3) der unterschiedlichen Bildabschnitte (122-1;210,220,230,240) der ersten Bildaufnahme zu bestimmen, um die jeweilige Helligkeit (122-3) der unterschiedlichen Bildabschnitte (122-1 ;210,220,230,240) mit der mittleren Helligkeit (122-2) der ersten Bildaufnahme (122) zu vergleichen, und um eine erste Helligkeitsinformation (132) der ersten Bildaufnahme (122) basierend auf dem Vergleich (130-4) der jeweiligen Helligkeit (122-3) der unterschiedlichen Bildabschnitte mit der mittleren Helligkeit (122-2) der ersten Bildaufnahme (122) bereitzustellen.

Gemäß einem weiteren Ausführungsbeispiel ist der Erfasser (130) ausgebildet, eine erste Helligkeitsinformation (132) der ersten Bildaufnahme (122) mit einer Information über eine erhöhte Helligkeit in den unterschiedlichen Bildabschnitten (122-1;210,220,230,240), mit einer Information über eine niedrigere Helligkeit in den unterschiedlichen Bildabschnitten (122-1;210,220,230,240) und mit einer Information über eine gleichmäßige Helligkeit in den unterschiedlichen Bildabschnitten bereitzustellen, und wobei der Erfasser (130) ausgebildet ist, um eine Zuordnung (130-5) zwischen unterschiedlichen Orten von an unterschiedlichen Orten angeordneten einzeln steuerbaren Lichtquellen (150-1,150-2,150-3,150-4;150-5;150-6) und unterschiedlichen Bildabschnitten einer ersten Bildaufnahme basierend auf einer ersten Helligkeitsinformation in unterschiedlichen Bildabschnitten (122-1:210,220,230,240) der ersten Bildaufnahme zu bestimmen.

Gemäß einem weiteren Ausführungsbeispiel umfasst ein Verfahren (600) zum Bereitstellen einer Aufnahmevorrichtung die folgenden Schritte: Aufnehmen eines Beleuchtungsbereichs in einer Belichtungszeit, Beleuchten des Beleuchtungsbereichs mittels mehrerer einzeln steuerbarer Lichtquellen, wobei die einzeln steuerbaren Lichtquellen an unterschiedlichen Orten bezüglich des Beleuchtungsbereichs angeordnet sind, Erfassen einer ersten Beleuchtungssituation des Beleuchtungsbereichs und Ansteuern der einzelnen steuerbaren Lichtquellen ansprechend auf die erste Beleuchtungssituation, so dass die einzeln steuerbaren Lichtquellen eine unterschiedliche Lichtmenge abgeben, um eine zweite Beleuchtungssituation in dem Beleuchtungsbereich zu erzeugen, die gleichmäßiger ist als die erste Beleuchtungssituation.

Gemäß einem weiteren Ausführungsbeispiel umfasst das Verfahren ein Computerprogramm mit einem Programmcode zur Durchführung des Verfahrens, wenn der Programmcode auf einem Computer abläuft.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers, durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft, Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

In anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Aufnahmevorrichtung mit folgenden Merkmalen:
einem Bildsensor (120) zum Aufnehmen eines Beleuchtungsbereichs (140) in einer Belichtungszeit;
mehreren einzeln steuerbaren Lichtquellen (150-1,150-2,150-3,150-4; 150-5; 150-6) zum Beleuchten des Beleuchtungsbereichs (140), wobei die einzeln steuerbaren Lichtquellen (150-1,150-2,150-3,150-4; 150-5; 150-6) an unterschiedlichen Orten bezüglich des Beleuchtungsbereichs (140) angeordnet sind;
einem Erfasser (130) zum Erfassen einer ersten Beleuchtungssituation (101) des Beleuchtungsbereichs (140), und
einer Steuerung (110) zum Ansteuern der einzelnen steuerbaren Lichtquellen (150-1,150-2,150-3,150-4; 150-5;150-6), ansprechend auf die erste Beleuchtungssituation (101), so dass die einzeln steuerbaren Lichtquellen (150-1,150-2,150-3,150-4; 150-5;150-6) eine unterschiedliche Lichtmenge abgeben, um eine zweite Beleuchtungssituation (102) in dem Beleuchtungsbereich (140) zu erzeugen, die gleichmäßiger ist als die erste Beleuchtungssituation (101).

2. Aufnahmevorrichtung (100) gemäß Anspruch 1, bei der die Steuerung (110) ausgebildet ist, um die einzelnen steuerbaren Lichtquellen (150-1,150-2,150-3,150-4;150-5;150-6) ansprechend auf die erste Beleuchtungssituation (101) anzusteuern, so dass die einzeln steuerbaren Lichtquellen (150-1,150-2,150-3,150-4;150-5;150-6) in der Belichtungszeit die unterschiedliche Lichtmenge abgeben.

3. Aufnahmevorrichtung (100) gemäß Anspruch 2, wobei der Bildsensor (120) ausgebildet ist, um eine erste Bildaufnahme (122) aufzunehmen, und wobei der Erfasser (130) ausgebildet ist, um die erste Beleuchtungssituation (101) des Beleuchtungsbereichs (140) aus der ersten Bildaufnahme zu erfassen.

4. Aufnahmevorrichtung (100) gemäß Anspruch 3, wobei der Bildsensor (120) ausgebildet ist, um eine zweite Bildaufnahme (124) mit der zweiten Beleuchtungssituation (102) aufzunehmen, und
wobei der Erfasser (130) ausgebildet ist, um eine erste Helligkeitsinformation (132) der ersten Bildaufnahme (122) zu bestimmen, und wobei die Steuerung (110) ausgebildet ist, um eine veränderte Einstellung (112) der einzeln steuerbaren Lichtquellen (150-1,150-2,150-3,150-4;150-5;150-6) in Abhängigkeit von der ersten Helligkeitsinformation (132) zu bestimmen.

5. Aufnahmevorrichtung (100) gemäß Anspruch 4, wobei der Erfasser (130) ausgebildet ist, um die erste Bildaufnahme (122) in unterschiedliche Bildabschnitte (122-1;210,220,230,240) aufzuteilen, um die erste Helligkeitsinformation (132) der ersten Bildaufnahme (122) bereitzustellen, und
wobei die Steuerung (110) ausgebildet ist, um die erste Helligkeitsinformation (132) der ersten Bildaufnahme (122) von den unterschiedlichen Orten der an unterschiedlichen Orten bezüglich des Beleuchtungsbereichs (140) angeordneten einzeln steuerbaren Lichtquellen (150-1,150-2,150-3,150-4;150-5;150-6) mit der unterschiedlichen Lichtmenge der an unterschiedlichen Orten bezüglich des Beleuchtungsbereichs (140) angeordneten einzeln steuerbaren Lichtquellen (150-1,150-2,150-3,150-4;150-5;150-6) zu verknüpfen, um die veränderte Einstellung (112) der einzeln steuerbaren Lichtquellen (150-1,150-2,150-3,150-4;150-5;150-6) bereitzustellen.

6. Aufnahmevorrichtung (100) gemäß der Ansprüche 4 bis 5, wobei der Erfasser (130) ausgebildet ist, um die erste Helligkeitsinformation (132) der ersten Bildaufnahme (122) unter Verwendung einer Bildaufnahmeuntersuchung der ersten Bildaufnahme (122) zu bestimmen, und
um unter Verwendung der Bildaufnahmeuntersuchung eine mittlere Helligkeit (122-2) der ersten Bildaufnahme und eine jeweilige Helligkeit (122-3) der unterschiedlichen Bildabschnitte (122-1;210,220,230,240) zu bestimmen.

7. Aufnahmevorrichtung (100) gemäß Anspruch 6, wobei der Erfasser (130) ausgebildet ist, um die jeweilige Helligkeit (122-3) der unterschiedlichen Bildabschnitte mit der mittleren Helligkeit (122-2) der ersten Bildaufnahme für die unterschiedlichen Bildabschnitte (122-1;210,220,230,240) zu vergleichen (130-4), um die erste Helligkeitsinformation (132) der ersten Bildaufnahmen (122) zu bestimmen.

8. Aufnahmevorrichtung (100) gemäß einem der Ansprüche 5 bis 7, wobei die vom Erfasser (130) bereitgestellte erste Helligkeitsinformation (132) der ersten Bildaufnahme eine Information über eine erhöhte Helligkeit in den unterschiedlichen Bildabschnitten, eine Informationen über eine niedrigere Helligkeit in den unterschiedlichen Bildabschnitten und eine Informationen über eine gleichmäßige Helligkeit in den unterschiedlichen Bildabschnitten aufweist, um die veränderte Einstellung (112) der einzeln steuerbaren Lichtquellen (150-1,150-2,150-3,150-4;150-5;150-6) basierend auf der von dem Erfasser (130) bereitgestellten ersten Helligkeitsinformation der ersten Bildaufnahme mittels der Steuerung (110) zu bestimmen.

9. Aufnahmevorrichtung (100) gemäß Anspruch 8, wobei der Erfasser (130) ausgebildet ist, um eine Zuordnung (130-5) zwischen den unterschiedlichen Orten der an unterschiedlichen Orten angeordneten einzeln steuerbaren Lichtquellen (150-1,150-2,150-3,150-4;150-5;150-6) und den unterschiedlichen Bildabschnitten (122-1;210,220,230,240) der ersten Bildaufnahme zu bestimmen,
wobei die Information der erhöhten Helligkeit, die Information der niedrigeren Helligkeit oder die Information der gleichmäßigen Helligkeit in den unterschiedlichen Bildabschnitten mit den unterschiedlichen Orten der an unterschiedlichen Orten angeordneten einzeln steuerbaren Lichtquellen (150-1,150-2,150-3,150-4;150-5;150-6) bezüglich des Beleuchtungsbereichs (140) zugeordnet sind.

10. Aufnahmevorrichtung (100) gemäß einem der Ansprüche 1 bis 9, wobei die Steuerung (110) ausgebildet ist, um eine veränderte Einstellung (112) der einzeln steuerbaren Lichtquellen (150-1,150-2,150-3,150-4:150-5:150-6) basierend auf der durch den Erfasser (130) bestimmten ersten Helligkeitsinformation (132) der ersten Bildaufnahme (122) und einer Zuordnung (130-5) zwischen den unterschiedlichen Orten der an unterschiedlichen Orten angeordneten einzeln steuerbaren Lichtquellen (150-1,150-2,150-3,150-4;150-5;150-6) und unterschiedlichen Bildabschnitten (122-1;210,220,230,240) der ersten Bildaufnahme einzustellen, um die erste Helligkeitsinformation (132) der ersten Bildaufnahme mit der Zuordnung zusammenzuführen.

11. Aufnahmevorrichtung (100) gemäß Anspruch 10, wobei die Steuerung (110) ausgebildet ist, um basierend auf der zusammengeführten ersten Helligkeitsinformation (134) der ersten Bildaufnahme mit der Zuordnung (130-5) die unterschiedlichen Lichtmengen der einzeln steuerbaren Lichtquellen (150-1,150-2,150-3,150-4;150-5;150-6) anzupassen,
wobei die Steuerung (110) ausgebildet ist, um basierend auf der Information über die erhöhte Helligkeit in den unterschiedlichen Bildabschnitten die unterschiedliche Lichtmenge der einzeln steuerbaren Lichtquellen (150-1,150-2,150-3,150-4;150-5;150-6) in der zweiten Beleuchtungssituation (102) in der Belichtungszeit zu verringern, so dass die unterschiedlichen Bildabschnitte (122-1;210,220,230,240) mit der erhöhten Helligkeit bei der zweiten Bildaufnahme (124) eine geringere Lichtmenge erhalten als bei der ersten Bildaufnahme (122), oder
wobei die Steuerung (110) ausgebildet ist, um basierend auf der Information über die niedrigere Helligkeit in den unterschiedlichen Bildabschnitten die unterschiedliche Lichtmenge der einzeln steuerbaren Lichtquellen (150-1,150-2,150-3,150-4;150-5;150-6) in der zweiten Beleuchtungssituation (102) in der Belichtungszeit zu erhöhen, so dass die unterschiedlichen Bildabschnitte (122-1;210,220,230,240) mit der niedrigeren Helligkeit bei der zweiten Bildaufnahme (124) eine höhere Lichtmenge erhalten als bei der ersten Bildaufnahme (122).

12. Aufnahmevorrichtung (100) gemäß einem der Ansprüche 1 bis 11, wobei die Steuerung (110) ausgebildet ist, um eine veränderte Einstellung (112) der einzeln steuerbaren Lichtquellen (150-1,150-2,150-3,150-4;150-5;150-6) basierend auf unterschiedlichen Lichtstärken der einzeln steuerbaren Lichtquellen (150-1,150-2,150-3,150-4;150-5;150-6) in der Belichtungszeit anzupassen, wobei die einzeln steuerbaren Lichtquellen (150-1,150-2,150-3,150-4;150-5;150-6) in der Belichtungszeit unterschiedliche Lichtstärken aufweisen.

13. Aufnahmevorrichtung (100) nach einem der vorhergehenden Ansprüche, bei der der Bildsensor (120) ausgebildet ist, um den Beleuchtungsbereich (140) von einem Start der Belichtungszeit bis zu einem Ende der Belichtungszeit aufzunehmen, und
bei der die Steuerung (110) ausgebildet ist, um die einzeln steuerbaren Lichtquellen (150-1,150-2,150-3,150-4;150-5;150-6) so anzusteuern, dass die einzeln steuerbaren Lichtquellen (150-1,150-2,150-3,150-4;150-5;150-6) am oder vor dem Start der Belichtungszeit eingeschaltet werden und zu unterschiedlichen Zeitpunkten während der Belichtungszeit ansprechend auf die erste Beleuchtungssituation (101) ausgeschaltet werden.

14. Aufnahmevorrichtung (100) nach einem der Ansprüche 1 bis 13, bei der der Bildsensor (120) ausgebildet ist, um den Beleuchtungsbereich (140) von einem Start der Belichtungszeit bis zu einem Ende der Belichtungszeit aufzunehmen, und
bei der die Steuerung (110) ausgebildet ist, um die einzeln steuerbaren Lichtquellen (150-1,150-2,150-3,150-4;150-5;150-6) so anzusteuern, dass die einzeln steuerbaren Lichtquellen (150-1,150-2,150-3,150-4;150-5;150-6) am oder vor dem Start der Belichtungszeit eingeschaltet werden, ansprechend auf die erste Beleuchtungssituation (101) unterschiedliche Lichtmengen erzeugen, und zu unterschiedlichen Zeitpunkten während der Belichtungszeit oder nach dem Ende der Belichtungszeit oder gleichzeitig am Ende der Belichtungszeit ausgeschaltet werden.

15. Aufnahmevorrichtung gemäß einem der vorhergehenden Ansprüche, die ferner folgende Merkmale aufweist:
einen Verschluss, wobei der Verschluss zwischen dem Bildsensor (120) und dem Beleuchtungsbereich (140) angeordnet ist, um den Bildsensor (120) in Abhängigkeit von der Belichtungszeit der unterschiedlichen Lichtmenge des Beleuchtungsbereichs (140) auszusetzen,
wobei die Belichtungszeit einer durch die Steuerung (110) eingestellten Zeitspanne entspricht, in der der Verschluss geöffnet ist.

16. Aufnahmevorrichtung (100) gemäß einem der vorhergehenden Ansprüche, die ferner folgende Merkmale aufweist:
eine Energieversorgung (410); und
ein Substrat, auf dem die einzeln steuerbaren Lichtquellen (150-1,150-2,150-3,150-4;150-5;150-6) angeordnet sind,
wobei das Substrat für jede Lichtquelle (150-1,150-2,150-3,150-4;150-5;150-6) oder jede Teilmenge von Lichtquellen, die eine kleinere Anzahl von Lichtquellen als eine Gesamtanzahl der Lichtquellen umfasst, jeweils einen Kondensator (K1,K2,K3) und jeweils einen Schalter (S1,S2,S3) aufweist,
wobei ein Anschluss des jeweiligen Kondensators (K1,K2,K3) für die jeweilige Lichtquelle (150-1,150-2,150-3,150-4;150-5;150-6) oder die jeweilige Teilmenge von Lichtquellen mit einem Anschluss des jeweiligen Schalters (S1,S2,S3) für die jeweilige Lichtquelle (150-1,150-2,150-3,150-4;150-5;150-6) oder die jeweilige Teilmenge von Lichtquellen verbunden ist und ein anderer Anschluss des jeweiligen Kondensators (K1,K2,K3) für die jeweilige Lichtquelle (150-1,150-2,150-3,150-4;150-5;150-6) oder die jeweilige Teilmenge von Lichtquellen mit der Energieversorgung (410) verbunden ist,
wobei die jeweiligen Kondensatoren (K1,K2,K3) und die jeweiligen Schalter (S1,S2,S3) und die jeweiligen Lichtquellen (150-1,150-2,150-3,150-4;150-5;150-6) oder die jeweiligen Teilmenge von Lichtquellen zueinander parallel geschaltet sind und alle von der Energieversorgung (410) mit Energie versorgt werden, und
wobei die jeweiligen Schalter (S1,S2,S3) durch die Steuerung (110) steuerbar sind.

17. Aufnahmevorrichtung (100) gemäß Anspruch 16, wobei die Steuerung (110) ausgebildet ist, um die Belichtungszeit für den Bildsensor (120) zeitgleich mit einem Einschaltzeitpunkt der jeweiligen Schalter der jeweiligen Lichtquelle einzuschalten, um den Beleuchtungsbereich (140) in der Belichtungszeit zeitgleich mit dem Einschaltzeitpunkt der einzelnen steuerbaren Lichtquellen (150-1,150-2,150-3,150-4;150-5;150-6) ansprechend auf die erste Beleuchtungssituation (101) zu beleuchten,
wobei die Steuerung (110) ausgebildet ist, um vor dem zeitgleichen Einschalten der Belichtungszeit und dem Einschaltzeitpunkt der einzeln steuerbaren Lichtquellen (150-1,150-2,150-3,150-4;150-5;150-6) die einzeln steuerbaren Lichtquellen (150-1,150-2,150-3,150-4;150-5;150-6) ausgeschaltet zu halten, und
wobei die Steuerung (110) ausgebildet ist, um den Einschaltzeitpunkt des zeitgleichen Einschaltens am Beginn oder in der Belichtungszeit zu wählen.

18. Aufnahmevorrichtung (100) gemäß einem der vorhergehenden Ansprüche, wobei der Erfasser (130) ausgebildet ist,
um eine erste Bildaufnahme (122) in unterschiedliche Bildabschnitte (122-1;210,220,230,240) zu segmentieren,
um eine mittlere Helligkeit (122-2) der ersten Bildaufnahmen (122) zu bestimmen,
um eine jeweilige Helligkeit (122-3) der unterschiedlichen Bildabschnitte (122-1;210,220,230,240) der ersten Bildaufnahme zu bestimmen,
um die jeweilige Helligkeit (122-3) der unterschiedlichen Bildabschnitte (122-1;210,220,230,240) mit der mittleren Helligkeit (122-2) der ersten Bildaufnahme (122) zu vergleichen, und
um eine erste Helligkeitsinformation (132) der ersten Bildaufnahme (122) basierend auf dem Vergleich (130-4) der jeweiligen Helligkeit (122-3) der unterschiedlichen Bildabschnitte mit der mittleren Helligkeit (122-2) der ersten Bildaufnahme (122) bereitzustellen.

19. Verfahren (600) zum Bereitstellen einer Aufnahmevorrichtung mit folgenden Schritten:
Aufnehmen eines Beleuchtungsbereichs in einer Belichtungszeit;
Beleuchten des Beleuchtungsbereichs mittels mehrerer einzeln steuerbarer Lichtquellen, wobei die einzeln steuerbaren Lichtquellen an unterschiedlichen Orten bezüglich des Befeuchtungsbereichs angeordnet sind;
Erfassen einer ersten Beleuchtungssituation des Beleuchtungsbereichs, und Ansteuern der einzelnen steuerbaren Lichtquellen ansprechend auf die erste Beleuchtungssituation, so dass die einzeln steuerbaren Lichtquellen eine unterschiedliche Lichtmenge abgeben, um eine zweite Beleuchtungssituation in dem Beleuchtungsbereich zu erzeugen, die gleichmäßiger ist als die erste Beleuchtungssituation.

20. Computerprogramm mit einem Programmcode zur Durchführung des Verfahrens nach dem Anspruch 19, wenn der Programmcode auf einem Computer abläuft.
